# EUROPEAN PATENT SPECIFICATION

(11) **EP 3 942 492 B1**
(45) Date of publication and mention of the grant of the patent: **28.01.2026**
(21) Application number: 20772538.3
(22) Date of filing: 20.03.2020
(51) Int. Cl.: G06Q 10/06

(54) **AUTOMATIC MEDIA PRODUCTION RISK ASSESSMENT USING ELECTRONIC DATASET**
AUTOMATISCHE MEDIENPRODUKTIONSRISIKOBEWERTUNG MITTELS EINES ELEKTRONISCHEN DATENSATZES
ÉVALUATION AUTOMATIQUE DE RISQUES DE PRODUCTION DE CONTENUS MULTIMÉDIAS À L'AIDE D'UN ENSEMBLE ÉLECTRONIQUE DE DONNÉES

(30) Priority: 21.03.2019 US 201962821885 P
(43) Date of publication of application: 26.01.2022
(73) Proprietor: Warner Bros. Entertainment Inc., Burbank, CA 91522 (US)
(72) Inventor: LARKIN, Mary, Burbank, California 91522 (US); CHAPPELL, Arvel A., Burbank, California 91522 (US); OSTROVER, Lewis S., Burbank, California 91522 (US)
(74) Representative: Latham, Stuart Alexander
(86) International application number: PCT/US2020/024065
(87) International publication number: WO 2020/191382

(56) References cited:
- JP-A- 2011 076 479
- US-A1- 2010 268 604
- US-A1- 2013 054 477
- US-A1- 2018 192 101
- US-A1- 2018 192 101
- US-A1- 2018 197 042

## Description

### PRIORITY CLAIM

The present application claims priority to U.S. Provisional Application No. 62/821,885 filed March 21, 2019.

### FIELD

The present disclosure relates to methods and apparatus for automatically recognizing and assessing elements in an electronic dataset for media production risks, for example, recognizing and assessing text, audio, and image data encoded in media production materials for clearance risks.

### BACKGROUND

Risk assessment is a labor-intensive part of media production for cinema, broadcast, cable, Internet, and other mediums. Many video and audio productions include contributions from numerous artists, copyright holders, or other rights holders. Sometimes, contributions are included incidentally, as when a vehicle carrying a trademarked logo, or a person wearing a copyrighted T-shirt move into the background. Even in studio environments, props and backgrounds may sometimes inadvertently trigger intellectual property rights or regulatory restrictions. Characters, locations, business or product names, music, content showing on display screens, and music or other recorded sounds, may all need clearing to avoid legal liability. A typical cinematic release may require thousands of items to be cleared before the movie can be released.

Human activity can be made more efficient by developing computerized workflow. But even with increased efficiency provided by online forms and data, a considerable amount of effort may still be required to recognize and prioritize elements of production that need to be cleared.

It would be desirable, therefore, to develop new methods and other new technologies for media production risk assessment, that overcome these and other limitations of the prior art and deliver more robust and efficient technology to recognize and assess clearance risks associated with media production.

### SUMMARY

This summary and the following detailed description should be interpreted as complementary parts of an integrated disclosure, which parts may include redundant subject matter and/or supplemental subject matter. An omission in either section does not indicate priority or relative importance of any element described in the integrated application. Differences between the sections may include supplemental disclosures of alternative embodiments, additional details, or alternative descriptions of identical embodiments using different terminology, as should be apparent from the respective disclosures.

In an aspect, a computer-implemented method for media production risk assessment may include accessing, by one or more processors, an electronic dataset for planning a media production, the dataset including metadata relating to potential risk elements. The electronic dataset for planning may include, for example, a PDF version of the script, set designs and plans, a Final Draft script file (.FDX), and other documents containing encoded text, video data, image data, and audio data.

The method may further include accessing, by the one or more processors, a database of electronic records each correlated to one or more of defined risk elements from one or more prior media productions. The electronic records may include, for example, encoded text, video data, image data, and audio data of the same types as contained in the electronic dataset for planning production.

The method may further include identifying, by the one or more processors, potential risk elements in the electronic dataset, at least in part by comparing the defined risk elements to potential risk elements detected in the electronic dataset by the one or more processors. Risk elements may include, for example, identifiers for props, animals, vehicles, costumes, graphic items, audios, songs, etc., that require, or are likely to require, copyright or other legal clearance before using in the media production. The comparing may include a machine learning component (e.g., a deep neural network) that has been trained using the dataset of defined risk elements and then applied to the electronic dataset for planning. For example, the identifying may include predicting a level of riskfor ones of the potential risk elements using a machine learning process trained to recognize similarity between the one or more defined risk elements and one or more referents of one or more symbol combinations appearing in the electronic dataset. The method may include training, by the one or more processors, the machine learning component using an iterative training algorithm. Training may include processing image or audio records created during production by production staff in comparison to risk assessment records kept by local prop & set design houses, stock databases as well as records from legacy productions relating to risk assessments for each of the input contents. Risk assessment information may be current in addition to previously assessed risk level to account for changing requirements and risks. For example, automatic processing may include reviews of current litigation dockets regarding related issues in territories where the media content being developed will be distributed.

The method may further include generating, by the one or more processors, a set of risk assessment measures each signifying a level of risk for a corresponding one of the risk elements. The measures each signifying a level of risk may be output as, for example, highlights or other region indicators in the digital images corresponding to the risk elements, a ranked or unranked listing of the risk elements, annotations noting a need for copyright clearance, or other indicator that brings the risk element to the user's attention in connection with a risk level. Risk levels may include two or more levels each representing a different risk level by a consistent metric. The method may further include saving the set of risk assessment measures in a computer memory. In an aspect, generating the set of risk assessment measures and identifying the potential risk elements may be performed by an identical component, for example, the machine learning component. In another aspect, the method may include adjusting the risk assessment based on context-sensitive factors for referents of symbol combinations appearing in the electronic dataset. For example, the processor may remove indicators of risk if certain conditions are met, e.g., if the risk element is only partially played/reproduced in the media production, obfuscated or concealed to avoid clearance risk. In addition, or in an alternative, the method may include providing in the indication of risk assessment a reference to digital exclusion images.

In an aspect, the method may include correlating the set of risk assessment measures for the identified ones of the risk elements to one or more symbol combinations appearing in a script of the electronic dataset. A symbol combination may include, for example, words, phrases, labels, or diagrams. The method may further include generating an annotated version of the script at least in part by adding one or more indications of the risk assessment marking each of the one or more symbol combinations. The method may further include packaging the annotated version of the script in a computer-readable medium with additional content coordinated with the one or more indications of risk assessment. For example, a risk element may be subject to some conditions of use such as in a specific context or only in association with specific characters, in which cases the "additional content" may refer to text, audio, or image data illustrating the specific condition. In an aspect, metadata, for example, intended geographic distribution territories may be identified by text, audio, or image data. In an alternative, or in addition, additional content may include other indicators of geographic territory location of where the content is to be distributed.

In an aspect, the identifying includes at least one of: analyzing an electronic script or digitally scanning one or more sets by the one or more processors. For example, the analyzing may include extracting one or more of text, audio, or image data corresponding to risk elements from a electronic document. For further example, digitally scanning may include generating an image of the set and using an image analysis module to identify risk elements appearing in the sets. The digital scanning may be, or may include, capturing an image of the one or more sets using a mobile computing device. In addition, the identifying may include identifying the potential risk elements using the machine learning component trained to recognize similarity between symbol combinations that connote the defined risk elements and the symbol combinations. Machine learning or rules-based processing may also be informed by new information (e.g. current news releases or relevant legal dockets including any current infringement lawsuit by a relevant rights holder) so that current risks not included in the training set can be recognized during automatic processing.

The method may be performed by a system or apparatus including one or more processors coupled to a computer memory holding program instructions that when executed by the one or more processors causes the system or apparatus to perform the method. The system or apparatus may include, or may be coupled to, an output device such as a display screen or printer for outputting the risk assessment measures, alone or in combination with production planning documents. In addition to the program instructions, the memory or separate memory resources may hold the production data, training data, and output data.

To the accomplishment of the foregoing and related ends, one or more examples comprise the features hereinafter fully described and particularly pointed out in the claims. The following description and the annexed drawings set forth in detail certain illustrative aspects and are indicative of but a few of the various ways in which the principles of the examples may be employed. Other advantages and novel features will become apparent from the following detailed description when considered in conjunction with the drawings and the disclosed examples, which encompass all such aspects and their equivalents.

### BRIEF DESCRIPTION OF THE DRAWINGS

The features, nature, and advantages of the present disclosure will become more apparent from the detailed description set forth below when taken in conjunction with the drawings in which like reference characters identify like elements correspondingly throughout the specification and drawings.
Fig. 1 is a schematic block diagram illustrating aspects of a system and apparatus for media production risk assessment, coupled to one or more client systems or devices, as described herein.
Fig. 2 is a schematic block diagram illustrating aspects of a server for media production risk assessment.
Fig. 3A is a schematic block diagram illustrating aspects of a client device for media production risk assessment.
Fig. 3B is a block diagram illustrating aspects of functional modules making up an engine for performing methods for media production risk assessment as described herein.
Fig. 3C is a block diagram illustrating aspects of input and output for performing methods for media production risk assessment as described herein.
Fig. 3D is a schematic block diagram illustrating an example of a data structure for relating components of electronic dataset to a set of risk assessment measures.
Fig. 4A is a conceptual diagram illustrating further functional components that make up an application(s) for performing methods for media production risk assessment process, including identifiers that may be generated as described herein.
Fig. 4B is a block diagram illustrating aspects of functional components making up a processing environment and an application(s) for performing methods for media production risk assessment as described herein.
Fig. 5 is a flowchart illustrating high-level aspects of a method for media production risk assessment.
Fig. 6 is a block diagram illustrating high-level aspects of a system or apparatus for media production risk assessment.
Fig. 7 is a concept diagram illustrating a media production set and electronic dataset thereof containing potential risk elements, and recognition and assessment of the risk elements according to one or more embodiments.
Fig. 8 is a flow chart illustrating aspects of a method for media production risk assessment.
Figs. 9-11 are flow charts illustrating further optional aspects or operations of the method diagrammed in Fig. 8.
Fig. 12 is a conceptual block diagram illustrating components of an apparatus or system for media production risk assessment.

### DETAILED DESCRIPTION

Various aspects are now described with reference to the drawings. In the following description, for purposes of explanation, numerous specific details are set forth in order to provide a thorough understanding of one or more aspects. It may be evident, however, that the various aspects may be practiced without these specific details. In other instances, well-known structures and devices are shown in block diagram form to facilitate describing these aspects.

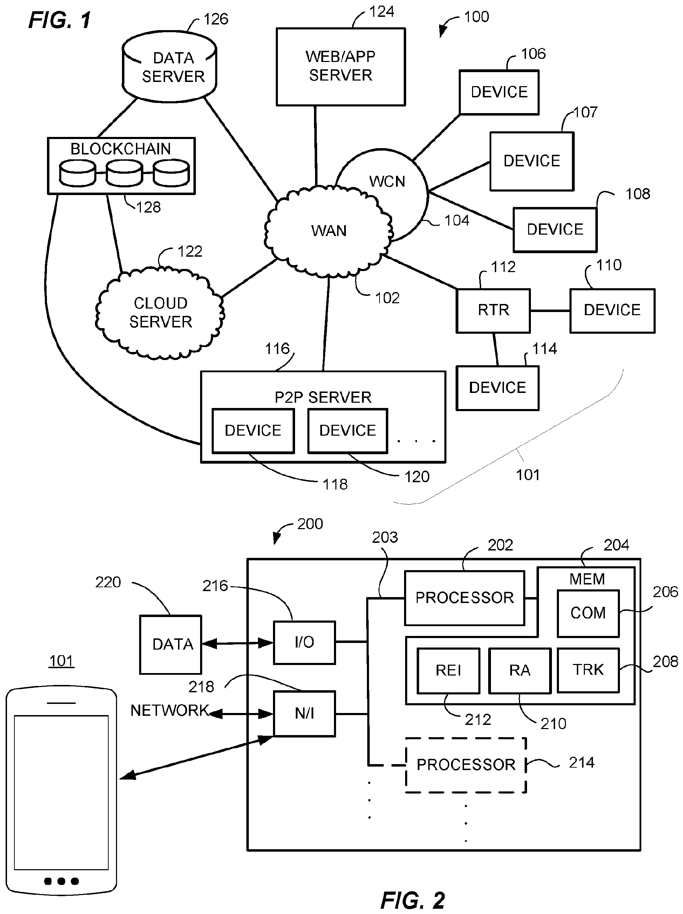

Fig. 1 illustrates aspects of an exemplary environment 100 in which a system and apparatus for implementing a method for media production risk assessment may operate. The method allows for recognizing and assessing clearance risk of pre-production data used in media production, for example, scripts, previz (previsualization) materials such as storyboards or 3-D models, and on-set audio-video, in the device-server environment 100. Other architectures may also be suitable.

The methods may include using an electronic dataset for planning a media production including potential risk elements. As used herein, "electronic dataset for planning" or "electronic dataset" means text, audio, and/or image data (including video data or still image data) used in media production, e.g., scripts, previz (previsualization) materials such as storyboards or 3-D models, and on-set audio-video data. For example, in some aspect, the electronic dataset may include a scanned or PDF version of the script for a media production, set designs, a Final Draft script file (FDX). The electronic dataset may also include digital scans of the actual set, such as on-set videos, storyboards, and 3-D models. As used herein, "risk elements" means objects, brands, and likenesses such as props, animals, vehicles, costumes, graphics items, audios, songs, actors, and the manners or contexts of handling of such elements, etc., that require copyright clearance or other legal clearance for commercially reasonable usage in media production.

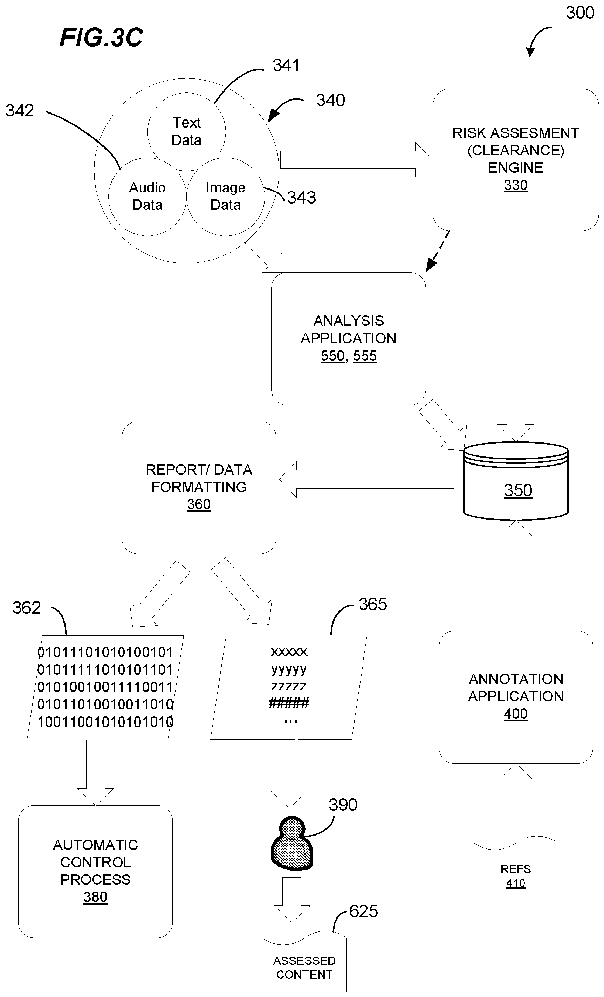

The methods may also include using a database of electronic records each correlated to one or more defined risk elements, e.g., from one or more prior media productions, and the database may include text, audio and/or image records. In an aspect, at a high level, the electronic records may include clearance records for previously logged risk elements such as objects, brands, or likenesses. For example, in some embodiments, the risk elements may be logged manually or identified by machine learning, using prior previz materials, on-set videos, or the corpus of actually produced movies or episodic shows to single out risk elements such as props, brands, or likenesses. Further details of the electronic records as used herein will be discussed below, e.g., with reference to Figs. 3C-3D.

In a network architecture, sensor data may be collected and processed locally or remotely and used to identify risk elements and assess clearance risk of electronic dataset for planning a media production. In some embodiments, electronic dataset may be received locally at the client devices, and a set of log data for the electronic dataset may be provided to a remote server for improving the machine learning (e.g., predictive analytics) algorithms and tracking use. As used herein, "machine learning algorithm" may include any one or a combination of predictive analytics algorithm or a rules-based algorithm.

One or more processors (hereinafter individually or collectively referred to as a "processor") may generate a set of risk assessment measures each signifying a level of risk for a corresponding one of the risk elements. The risk may include, for example, a risk of copyright or other legal violations or misuse. The processor may provide the set of risk assessment measures to a user (e.g., users of production risk assessment system or apparatus, such as production staff including production leadership such as directors, producers, assistant directors, and other members of the production departments such as the costume department, set (art) department, props (art) department, hair/makeup department, sound department, camera and electrical department, script department, legal clearance department, etc.) interacting with the environment 100 via software or hardware or both using a computer device 101.

Referring to Fig. 1, a suitable environment 100 may include various computer servers and other network entities including client device entities in communication via one or more networks, for example a Wide Area Network (WAN) 102 (e.g., the Internet) and/or a wireless communication network (WCN) 104, for example a cellular telephone network, using any suitable high-bandwidth wireless technology or protocol, including, for example, cellular telephone technologies such as 3rd Generation Partnership Project (3GPP) Long Term Evolution (LTE), 5G fifth-generation cellular wireless, Global System for Mobile communications (GSM) or Universal Mobile Telecommunications System (UMTS), and/or a wireless local area network (WLAN) technology using a protocol such as Institute of Electrical and Electronics Engineers (IEEE) 802.11, and equivalents thereof. The servers and other network entities (collectively referred to as "nodes") connect directly, dynamically and non-hierarchically to as many other nodes as possible and cooperate with one another to efficiently route data from/to client devices. This lack of dependency on one node allows for every node to participate in the relay of information. Mesh networks dynamically self-organize and self-configure. The servers can connect to client devices in a server-client structure. Some client devices can also act as servers.

Client devices may include, for example, computer devices 101 (Figs. 1 and 2) such as smartphones, smart devices such as smart watches, notepad computers, laptop computers, desktop computers, mixed reality (xR) headsets, digital cameras, and special purpose media production controllers and servers.

Computer servers may be implemented in various architectures. For example, the environment 100 may include one or more Web/application servers 124 containing documents and application code compatible with World Wide Web protocols, including but not limited to HTML, XML, PHP and JavaScript documents or executable scripts, for example. The environment 100 may include one or more data servers 126 and/or cloud server 122 for holding data, for example video, audio-video, audio, graphical content components of interactive media content for consumption using a client device, software for execution on or in conjunction with client devices, for example sensor control and emotion detection applications, and data collected from users or client devices. Data collected from client devices or users may include, for example, production planning documents as described herein, user identity, user profile data, sensor data and application data. Data may be collected by a background (not user-facing) application operating on the client device, and transmitted to a data sink, for example, a cloud-based data server 122 or discrete data server 126. Application data means application state data, including but not limited to records of user interactions with an application or other application inputs, outputs or internal states. Applications may include software for recognition and assessment of production risks and supporting functions. Applications and data may be served to one or more system nodes including devices 101 from one or more of the foregoing servers (e.g., 122, 124, 126) or other types of servers, for example, any server accessing a distributed blockchain data structure 128, or a peer-to-peer (P2P) server 116 including a peer-to-peer network such as a mesh network (including partial, full, and wireless mesh networks), such as may be provided by a set of devices 118, 120, etc., and the like, operating contemporaneously as micro-servers or clients. In an aspect, for example, if a particular set of territories has been or is currently litigating new clearance disputes, then a processor may recognize and factor in new clearance risks by retraining a machine learning component using the new risk information or applying of a rules-based algorithm module programmed to recognize new risk profiles. Geographic risk usually pertains to where the media content is to be distributed and to a lesser extent or not at all where the media is being originated.

In an aspect, information held by one or more of the content server 126, cloud-based content server 122, distributed blockchain data structure 128, or a peer-to-peer (P2P) server 116 may include a data structure or database of electronic records, which may include, but not limited to, media components such as text, audio, or image dataset, each record being correlated to one or more risk elements from one or more prior media productions. The data structure may relate user-perceivable aspects of electronic dataset for planning a media production to identifiers for identified risk elements, for example by using characteristic parametric values, and to one or more indicators of context-sensitive factors relevant to one or more risk elements, and other unique metadata sets characterizing each of the risk elements.

The network environment 100 may include various devices (collectively referred to as devices 101), for example a smartphone 106, a tablet 107, a smart device 108, etc., that may be connected to servers via the WCN 104 and/or WAN 102; any one of the foregoing device types including devices 118, 120, or a desktop 110 or a media production system 114 that may be connected to servers via a router 112 and the WAN 102 and/or WCN 104, and the like. In general, devices 101 may be, or may include or communicably connected to, computers used by users to provide the electronic dataset for planning a media production or to access the database of electronic records via a server or from local storage.

Referring to Fig. 2, the device 101 in the network environment 100 may include various computing devices, for example a mobile smartphone client of a user, for example a production staff taking on-set videos or photos using his smartphone. Other client devices may include, for example, a tablet client, or a laptop client device, a mixed reality (e.g., virtual reality and augmented reality) client device, or a smart wearable device. The computing devices may connect to one or more networks. For example, the device 101 may connect to servers via a wireless access point (not shown) communicably connected to the wireless communications network (WCN) 104, the WCN 104 and the WAN 102, either directly or via a router/modem 112 or a mobile wireless access point (WAP). For further example, in a mobile mesh network 116, nodes 118, 120 may include small radio transmitters that function as a wireless router. The nodes 118, 120 may use the common Wi-Fi standards to communicate wirelessly with other devices, and with each other.

For example, users (e.g., production staff) working on a common media production may be interested in the same or similar electronic dataset including potential risk elements or the database of electronic records correlated to defined risk elements from prior media productions or current analysis. Continuing the example, suppose that the first user using the device 118 has already downloaded data components making up the shared electronic dataset and its mobile mesh network 116 comes within range of a second user using any of the devices 101 in the compatible mesh network 116. Then, one or more of the other devices 101 (devices 106-120 are collectively referred to as the devices 101; Fig. 1) may join the mesh network 116. Once the new nodes have joined, the original nodes 118 and 120 of the mesh network 116 may cooperate to transmit electronic dataset components or other data to the new nodes in the second device (118 or 120 or another device 101 joining the mesh network 116), without needing to pass data through the WCN 104 or WAN 102. Thus, demands on other networks may be reduced. Mesh networks may be useful in delivering the database of electronic records and the set of risk assessment measures because client devices of users working on the same media production may be both more likely to request similar dataset or electronic records and to be relatively near each other.

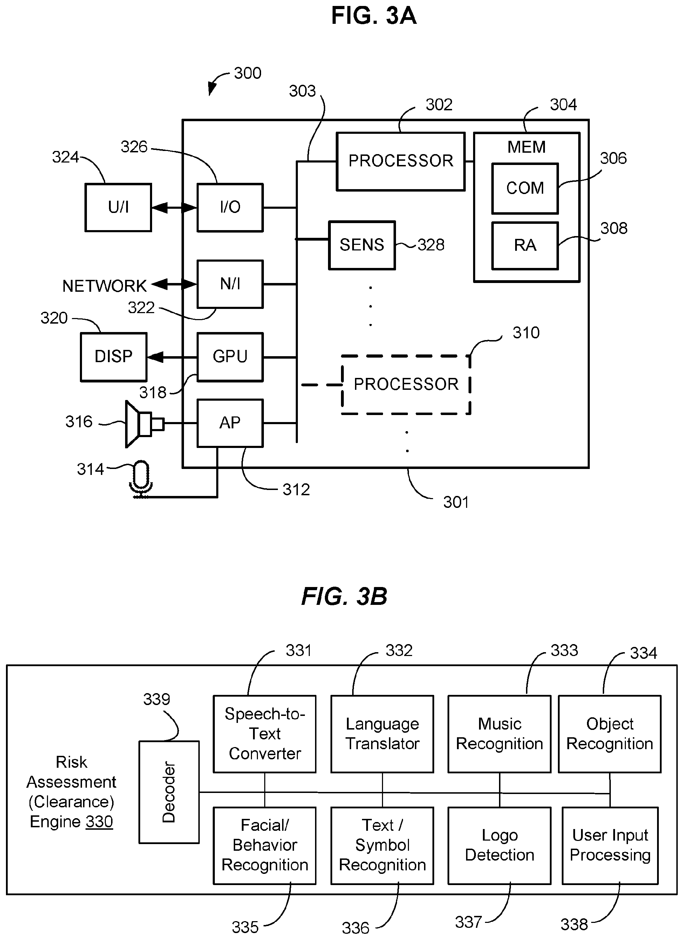

Fig. 2 further shows a risk assessment server 200 for recognizing and assessing clearance risk for media production, which may operate in the environment 100, in similar networks, or as an independent server. The server 200 may include one or more hardware processors 202, 214 (two of one or more shown). Hardware may include firmware. Each of the one or more processors 202, 214 may be coupled to an input/output port 216 (for example, a Universal Serial Bus port or other serial or parallel port) to a source 220 for sensor data indicative of text, audio, or image risk elements that are present in the electronic dataset for planning a media production, such as objects, texts, music, logos, brands, or symbols recognized by sensors (e.g., sensor(s) 328; Fig. 3A). For example, in an aspect, risk elements may include some prop appearing in an on-set video that was either overlooked previously, or was not actually 'handled' by an actor, or made the focus of a scene (e.g., due to some on-set improvisation), such that such object was not a 'prop' until the foregoing occurrence happened. The processor may control output of the electronic dataset for planning a media production responsive to the sensor data, for example, by using a machine learning component. Any source that contains a derived risk element recognition may be useful for input to a machine learning algorithm of the machine learning component.

The server 200 may track actor actions and identification of risk elements across multiple media productions. Some types of servers, e.g., cloud servers, server farms, or P2P servers, may include multiple instances of discrete servers 200 that cooperate to perform functions of a single server. In some embodiments, the source 220 may be separately or additionally used for sensor data indicative of risk elements. Suitable sources may include, for example, Global Positioning System (GPS) or other geolocation sensors, one or more cameras configuring for capturing or recognizing props, brand logos, texts, or actor likenesses, microphones for capturing sounds such as copyrighted music or audio segments, and any other sensor useful for detecting a risk element in an electronic dataset for planning a media production.

The server 200 may include a network interface 218 for sending and receiving applications and data, including but not limited to sensor and application data used for media production risk assessment. The electronic dataset may be received by the server 200 from a device 101 or stored locally by the client device. If stored local to the client device, the client and server 200 may cooperate to handle sensor data and other risk assessment functions. In some embodiments, the client may handle all risk assessment functions and the server 200 may be used for tracking only or may not be used at all. In other embodiments, the server 200 performs risk assessment functions.

Each processor 202, 214 of the server 200 may be operatively coupled to at least one memory 204 holding functional modules 206, 208, 210, 212 of an application or applications for performing a method as described herein. The modules may include, for example, a communication module 206 for communicating with client devices and servers. The communication module 206 may include instructions that when executed by the processor 202 and/or 214 cause the server to communicate control data, risk element data, and sensor data with a client device via a network or other connection. A tracking module 208 may track prior or concurrent risk assessments for adding to training databases for training a machine-learning module to identify potential risk elements and/or assess a measure of risk for identified elements.

The modules may further include a risk assessment (RA) module 210. The RA module 210 may include instructions that when executed by the processor 202 and/or 214 cause the server 200 to perform one or more of assembling or configuring a set of risk assessment measures each signifying a level of risk for a corresponding one of the risk elements, and further operations as described in more detail herein below that when executed by the processor causes the server to perform any one or more of the functions described herein for media production risk assessment. In alternative embodiments, the RA module 210 may be omitted from the server memory 204 and provided in the memory of a client device. The memory 204 may contain additional instructions, for example an operating system, and supporting modules.

The modules may include, for example, a risk element identification (REI) module 212. The REI module 212 may include instructions that when executed by the processor 202 and/or 214 cause the server to perform one or more of identifying risk elements in the electronic dataset, at least in part by comparing the defined risk elements to potential risk elements detected in the electronic dataset by the one or more processors. For example, the REI module 212 may apply a rule-based algorithm, a heuristic machine learning algorithm (e.g., a deep neural network, hereinafter "predictive analytics algorithm") or both, to create one or more sets of identifiers consistent with the input parameters. In some embodiments, the REI module 212 may apply the rule-based algorithm or the heuristic machine learning algorithm to data indicative of objects, brands, and likenesses of potential interest (i.e., presenting potential legal clearance issues), thereby identifying risk elements useful for a risk assessment algorithm. The REI 212 when executed by the processor may cause the server to assign a likelihood of a targeted outcome, e.g., a defined emotional state targeted for the interactive media content's emotional arc, for specific control actions. The REI module 212 may perform other or more detailed operations for identifying risk as described in more detail herein below.

Referring to Fig. 3A, aspects of a media production user apparatus 300 for obtaining and/or sending an electronic dataset for planning a media production, based on sensor data including potential risk elements in a media production material (e.g., previz materials and/or on-set materials) are described. In some embodiments, the same computing device (e.g., apparatus 300) may operate both as a risk assessment client apparatus and as a risk assessment server, for example, as a node of a mesh network. In such embodiments, the computing device may also include functional modules and interface devices as described above for the server 200.

The apparatus 300 may be, or may be located in, a device 101. The client 300 may include a processor 302, for example a central processing unit based on 80x86 architecture as designed by Intel^{™} or AMD^{™}, a system-on-a-chip as designed by ARM^{™}, or any other suitable microprocessor(s). The processor 302 may be communicatively coupled to auxiliary devices or modules of the media production user apparatus 300, using a bus or other coupling. In some aspect, the processor 302 and its coupled auxiliary devices or modules may be housed within or coupled to a housing 301, for example, a housing having a form factor of a smartphone, a tablet, wearable goggles, glasses, visor, laptop computer, wearable device, desktop computer, or other form factors.

A user interface device 324 may be communicably coupled to the processor 302 for providing user control input to a risk assessment process as described herein. The process may include outputting or saving a set of risk assessment measures associated with a risk element for the identified ones of risk elements in a computer memory. In some embodiments, the risk assessment process may include, text, audio, and/or image output for risk assessment processes of potential risk elements in media production materials operated by a risk assessment (clearance) engine (e.g., 350; Fig. 3B) executing on the processor 302 (or alternatively or in conjunction, on processors 202 and/or 214); Fig. 2).

User control input may include, for example, selections from a graphical user interface or other input (e.g., textual or directional commands) generated via a touch screen, keyboard, pointing device (e.g., mouse, trackpad or trackball), microphone, motion/gesture sensor, camera, or some combination of these or other input devices represented by block 324. Such user interface device 324 may be coupled to the processor 302 via an input/output port 326, for example, a Universal Serial Bus (USB), Bluetooth^{®}, Wi-Fi^{™}, or equivalent ports. Control input may also be provided via one or more sensors 328 coupled to the processor 302. The sensors 328 may include, for example, a motion sensor (e.g., an accelerometer), a position sensor, a camera or camera array (e.g., stereoscopic array), a biometric temperature or pulse sensor, a touch (pressure) sensor, an altimeter, a location sensor (for example, a Global Positioning System (GPS) receiver and controller), a proximity sensor, a motion sensor, a smoke or vapor detector, a gyroscopic position sensor, a plenoptic camera, a radio receiver, a multi-camera tracking sensor/controller, an eye-tracking sensor, an infrared/heat signature sensor, a microphone or a microphone array. In some aspect, any or all of the sensors 328 may be housed in a single or multiple devices, such as a smartphone and the like.

In some implementations, the sensors 328 may be located inside the device, outside the device (e.g., in a production room or theater), or both. For example, cameras, microphones, motion-tracking or gesture sensors (e.g., Kinect^{™} by Microsoft Corporation in Redmond, WA), and the like may be located outside (but may be communicably connected to) the device 101, or they may be located inside or on the device 101. For example, a smartphone device, an loT device, a smart device (e.g., Apple Watch by Apple, Inc, Google Home by Google, Inc., Amazon Echo by Amazon, Inc., etc.) or other network-enabled device may house and provide or augment functionalities of one or more of the foregoing sensors. The sensor or sensors 328 may also detect biometric data used as an indicator of the user's emotional state, for example, facial expression, skin temperature, pupil dilation, respiration rate, muscle tension, nervous system activity, or pulse. In addition, the sensor(s) 328 may detect a sensor target or the target's context, for example an identity, position, size, orientation and movement of the sensor target's physical environment and of objects in the environment, motion or other state of a sensor target. For example, the sensor may be used to determine whether a prop is 'handled' by a actor, or whether a prop is positioned in a set to be visible or in-focus. The sensor or sensors 328 may generate orientation data for indicating an orientation of the sensor target. For example, the sensors 328 may include a camera or image sensor positioned to detect an orientation of one or more of the sensor target's hands or eyes, or to capture video images of the sensor target's physical environment or both. In some aspect, a camera, image sensor, or other sensor configured to detect a sensor target's movements of hands or eyes may be integrated into the apparatus 300 or into ancillary equipment coupled to the apparatus 300. The one or more sensors 328 may further include, for example, an interferometer positioned in the support structure 301 or coupled ancillary equipment and configured to indicate a surface contour of the objects such as props or the actor's hands or eyes. The one or more sensors 328 may further include, for example, a microphone, array or microphones, or other audio input transducer for detecting spoken lines or verbal and non-verbal audible sounds in the media production materials (e.g., electronic script, previz materials, or on-set videos).

The apparatus 300 or a connected server may track identification of risk elements and generation of identifiers for the identified risk elements as risk assessment history. Risk assessment history may include a log-level record of risk element identification decisions made in response to an electronic dataset for planning a media production and other input from user devices. Risk assessment history may also include a set of risk assessment measures for the identified risk elements each associated with a risk assessment containing a level of risk. The server 200 may track user actions and risk assessments across multiple media productions or a corpus of actually produced media materials (e.g., movies, episodic shows, theater performances, etc.). In an aspect, the server may process not just risk assessment history, but also current info about current clearance issues and territories of concern. Perhaps we should consider paragraph 053 with respect to "risk assessment history" since current events such as some new identification of potential legal clearance litigation or territories of concern could also feed the apparatus 300 that tracks risk items.

Sensor data from the one or more sensors 328 may be processed locally by the CPU 302 to generate an electronic dataset for planning a media production, and/or transmitted to a server 200 for processing by the server in real time, or for non-real-time processing. As used herein, "real time" refers to processing responsive to user input without any arbitrary delay between inputs and outputs; that is, that reacts as soon as technically feasible. "Non-real time" refers to batch processing or other use of sensor data that is not used to provide immediate control input for controlling the display, but that may control the display after some arbitrary amount of delay.

To enable communication with another node of a computer network, for example the risk assessment server 200, the client 300 may include a network interface 322, e.g., an Ethernet port, wired or wireless, or a 4G/LTE/5G cellular communications network interface, etc. Network communication may be used, for example, to enable multi-user interaction with risk assessment data. Network communication can also be used for data transfer between the client 300 and other nodes of the network, for purposes including data processing, content delivery, content control, and tracking. The client 300 may manage communications with other network nodes using a communications module 306 that handles application-level communication needs and lower-level communications protocols, preferably without requiring user management.

A display 320 may be coupled to the processor 302, for example via a graphics processing unit 318 integrated in the processor 302 or in a separate chip. The display 320 may include, for example, a flat screen color liquid crystal display (LCD) illuminated by light-emitting diodes (LEDs) or other lamps, a projector driven by an LCD or by a digital light processing (DLP) unit, a laser projector, a light field display (e.g., support near-eye solution and far-eye solution, or generate images from different planes a-la wave guide bending), a pass-through display (e.g., a head-mounted virtual retinal display by Magic Leap, Inc. (Plantation, FL)) or other digital display device. Other digital display devices may also be used.

The display device 320 may be incorporated into the device or may reside separately from and communicably connected to the device, for example, as a separate display unit such as a flat screen TV or computer monitor located in a media production studio or set. Video output driven by a risk assessment (clearance) engine operating on the processor 302, or other application for coordinating user inputs with the risk assessment, may be provided to the display device 320 and output as a video display to the user. Similarly, an amplifier/speaker or other audio output transducer 316 may be coupled to the processor 302 via an audio processor 312. Audio output correlated to the video output and generated by the risk assessment module 308, risk assessment (clearance) engine or other application may be provided to the audio transducer 316 and output as audible sound to the user. The audio processor 312 may receive an analog audio signal from a microphone 314 and convert it to a digital signal for processing by the processor 302. The microphone can be used as a sensor for detection of potential risk elements and as a device for user input of verbal commands, or for social verbal responses to other users.

The media production user apparatus 300 may further include a random-access memory (RAM) 304 holding program instructions and data for rapid execution or processing by the processor during media production risk assessment in response to accessing an electronic dataset for planning a media production. When the client 300 is powered off or in an inactive state, program instructions and data may be stored in a long-term memory, for example, a non-volatile magnetic, optical, or electronic memory storage device (not shown). Either or both RAM 304 or the storage device may include a non-transitory computer-readable medium holding program instructions, that when executed by the processor 302, cause the device 300 to perform a method or operations as described herein. Program instructions may be written in any suitable high-level language, for example, C, C++, C#, JavaScript, PHP, or Java^{™}, and compiled to produce machine-language code for execution by the processor.

Program instructions may be grouped into functional modules 306, 308, to facilitate coding efficiency and comprehensibility. The modules, even if discernable as divisions or grouping in source code, are not necessarily distinguishable as separate code blocks in machine-level coding. Code bundles directed toward a specific type of function may make up a module, regardless of whether machine code on the bundle can be executed independently of another machine code. The modules may be high-level modules only. The risk assessment module 308 may perform operations of any method described herein, and equivalent methods, in whole or in part. Operations may be performed independently or in cooperation with another network node or nodes, for example, the server 200.

Fig. 3B illustrates aspects of functional modules that may comprise an apparatus or application executed by the processors 202 or 214 of server 200 or processors 302 or 310 of the client 300, such as a risk assessment (clearance) engine 330, for performing methods for media production risk assessment according to one or more embodiments of the instant disclosure.

For example, the risk assessment (clearance) engine 330 may be a brand/copyright clearance engine, which may be used in the context of recognizing and assessing clearance risk for text, audio, character and image elements that may be present in a media production material such as an electronic dataset 340 for planning a media production (Fig. 3C). For example, the risk assessment engine 330 may be used as a script breakdown tool that identifies risk elements in the electronic dataset 340, or in addition thereto, in whole or in part. A risk assessment engine 330 or the like may also include other modules, for example a database module holding text (e.g., brand logos, copyrighted phrases, etc.), audio (such as songs and music), image (e.g., graphic logos, copyrighted materials, video clips, likeness of famous person, etc.) and parameter data, which are not illustrated. An electronic dataset received from a user device (e.g., device 101) may be provided to a user input processing module 338. Based on the data signals and the context in which it is received (e.g., media production state at the time of receipt such as the version of the script breakdown, whether the media production material is a previz material or an on-set, etc.), the data processing module 338 may set variables or write data to memory locations that are used by other modules of the risk assessment engine 330, operating concurrently or sequentially with operation of the user input module 338. More detailed algorithms for performing functions of the risk assessment engine 330 are described elsewhere below. It should be appreciated that the engine 330 need not include all the modules shown or described in connection with Fig. 3B. Other useful combinations of the modules including combination in which one or more of the modules are omitted or one or more other modules are added would be apparent for those skilled in the art.

Referring to Fig. 3C, in one or more embodiments, the risk assessment engine 330 may receive or otherwise access an electronic dataset 340 for planning a media production that may include text data 341, audio data 342, image data 343, or a combination thereof, which includes one or more potential risk elements. For example, the electronic dataset 340 may be an on-set video that contains lines spoken by one or more actors, or songs sung by actors or played back from a prior recording. As used herein, "audio data" may include sound such as music or songs and vocal utterances (human or non-human such as animals) such as dialogue, speech, audible background voices (TV, speech, radio, etc.). The sound and vocal instances should be discernable by humans when played back at normal volume. For example, in some embodiments, the sound and vocal instances are within the hearing range of humans. The risk assessment engine 330 may include a speech-to-text converter module 331. In an implementation, the speech-to-text converter module 331 may extract sound or vocal instances from an audio data 342. The speech-to-text conversion may improve turnaround times of clearing risk elements in a media production compared to using manual or semi-manual transcription known in the art. Using speech-to-text conversion by the speech-to-text converter module 331 may also reduce time pressures to creative teams by supplying reference materials faster and more accurately for the risk assessment. As used herein, the term "speech-to-text converter" refers to any system capable of converting audio into a text representation or copy of the audio. The speech-to-text converter module 331 may also be referred as a speech recognition (SR) module, which may recognize the speeches into texts. Various speech recognition techniques may be used at the speech-to-text converter module 331. For example, a speech-to-text software application and the hardware suitable for executing such application that are known in the art would be considered a speech-to-text converter. A system that is configured to produce text from audio-video data may include a component that receives audio-video data, and a component that provides speech-to-text conversion.

The risk assessment engine 330 may further include a language translator module 332. As used herein, the term "language translator" refers to systems capable of converting audio or text from one language into another language. For example, the language translator module 332 may comprise translation software (e.g., software that is capable of converting text in one language to text in another language), which may or may not work in conjunction with human translators. Any suitable language translator may be used.

The risk assessment engine 330 may further include a music recognition module 333. In some implementations, the music recognition module 333 uses audio fingerprinting to recognize music content present in the dataset 340. Any suitable technique for music recognition may be used. An audio fingerprint is a condensed, machine-generated digital summary generated from an audio signal, which can be used to identify an audio sample or quickly locate similar items in an audio database. Music identification using audio fingerprints may be used to monitor the use of specific musical works and performances on radio broadcast, records, CDs and peer-to-peer networks. In an aspect, the music recognition module 333 may be used to identify or verify music clearance information such as copyright compliance, licensing, and other monetization schemes for the recognized music content. In an aspect, symbolic indications of audio fingerprinting or recognized music may be used in a process that automatically generates annotations for use in the media production risk assessment as envisioned herein.

The risk assessment engine 330 may further include an object recognition module 334 and/or a facial recognition module 335. As used herein, "object recognition" refers to a technology capable of identifying or verifying an object from a digital image or video frame from a video source, and "facial recognition" refers to a technology capable of identifying or verifying a person from a digital image or a video frame from a video source. Multiple methods are known in which object or facial recognition systems work. For example, in some implementations, the object recognition module 334 may compare predetermined object features from a given image or video frame with objects within a database, and the facial recognition module 335 may similarly compare predetermined facial features from a given image or video frame with faces within a database. In some embodiments, the object recognition module 334 and the facial recognition module 335 may each be an artificial intelligence (AI) based application that can uniquely identify an object or a person by analyzing patterns based on the object's textures and shape, and the person's facial textures and shape. In some embodiments, the object recognition module 334 and the facial recognition module 335 receive digital image decoded by the decoder 339, which it generates from a dataset 340 received or accessed by the risk assessment engine 330. In some embodiments, the decoder 339 may convert the image data 343 contained in the dataset 340, for example, a video data encoded in MP4, AVI, FLV, MOV, DVD (VOB), DVR-MS RM, MPEG file format or the like, into a digital image (or a seriate image), for example in JPG, BMP, GIF, TGA, TIF, PCX, PNG, and ICO file format or the like. The digital images may include data including still images and moving images. Alternatively, the object recognition module 334 and the facial recognition module 335 may receive digital image from the user input processing module 338, which may receive or process digital image input received by the computing apparatus 100 from a user.

In some implementations, the object recognition module 334 and the facial recognition module 335 detects the object, and the face of a person, respectively, from the received digital image. The object or facial recognition (detection) can be performed by using a predetermined algorithm. For example, in some implementations, a convolutional neural network (CNN) known in the art may be used, which hierarchically detects features including low-order features such as edges and high-order features such as eyes and a mouth and finally detects the barycentric position of the face. For example, a processor may implement a CNN to obtain the barycentric position of key features of an object, or of a face such as an eye or mouth. Of course, other features of an object or a face may be used. For further example, a processor may implement an algorithm for analyzing the relative position, size, and/or shape of the eyes, nose, cheekbones, jaw, etc. These features may then be used to search for other images with matching features. Other known recognition algorithms that may be used by the object recognition module 334 and the facial recognition module 335 in one or more embodiments of the instant disclosure include principal component analysis using eigenfaces, linear discriminant analysis, elastic bunch graph matching using the Fisherface algorithm, the hidden Markov model, the multilinear subspace learning using tensor representation, and the neuronal motivated dynamic link matching. In an aspect, symbolic indications (symbolic combinations) of recognized objects and faces (referents) may be used in a process that automatically generates annotations for use in media production risk assessment.

The risk assessment engine 330 may further include a text/symbol recognition module 336. In some implementations, the text/symbol recognition module 336 performs optical character recognition and symbol (string) matching to recognize text or symbol content present in the dataset 340. Any suitable technique for text/symbol recognition may be used. In an aspect, optical character recognition may detect words, phrases, and other strings of characters and symbols, including foreign languages. For instance, optical character recognition may be used to detect trademarks (e.g., word marks, and other text or symbol portions), copyrighted phrases, brand names, and logos appearing in electronic dataset for planning a media production. In an aspect, optical character recognition may be used in a process that automatically generates annotations for use in the media production risk assessment as envisioned herein.

The risk assessment engine 330 may further include a logo recognition module 337. As used herein, "logo recognition" refers to a technology capable of identifying or verifying a logo from a digital image or video frame from a video source. Multiple methods are known in which logo recognition systems work. For example, in some implementations, the logo recognition module 337 may compare predetermined logo features from a given mage or video frame with objects within a database, similar to the object recognition module 334 and the facial recognition module 335 that uses data mining techniques and recognition algorithms (e.g., neural network) described above, except there are some substantial differences between logos and such categories of recognition. For example, automatic learning of face models depends on face detection, whereas general logo detection is not practical. In some embodiments, the logo recognition module 337 may be an artificial intelligence (AI) based application that can uniquely identify a logo by analyzing patterns based on the logo's edge contours, e.g., by using Generalized Hough Transform, keypoints (features), e.g., by using scale-invariant feature transform (SIFT) or Speeded Up Robust Features (SURF), and signature scan lines (e.g., if the logo if very distinctive, it would have a characteristic, scale-invariant signature in the scan lines, such as horizontal, vertical, and diagonal), etc. Any suitable technique for logo recognition and image pattern analysis may be used. For example, various techniques known in the fields of computer vision and image processing may be employed in training or applying the models for the Al application. For example, the risk assessment engine 330 may use cross correlation techniques and/or a neural network with a region proposal network in order to localize a logo within an image in the image data 343, such as to determine a bounding box around the logo.

In some embodiments, the logo recognition module 337 receive digital image decoded or pre-processed (i.e., transformed into a more raw form to give to the logo detection module 337, such as noise filtering, changing color domains to create binary B/W image) by the decoder 339, which it generates from a dataset 340 received by the risk assessment engine 330.

In an aspect, symbolic indications (symbolic combinations) of recognized logos (referents) may be used in a process that automatically generates annotations for use in media production risk assessment.

In some embodiments, for each instance where Al based application is used in the functional modules 331-337 of the risk assessment engine 330, two or more neural networks may have been trained using different neural network architectures, but with the same training data. In some aspect, the machine learning component of the Al application may be trained using an iterative training algorithm. A weighted sum or other known process may be used to determine an overall result based on the application of the multiple models.

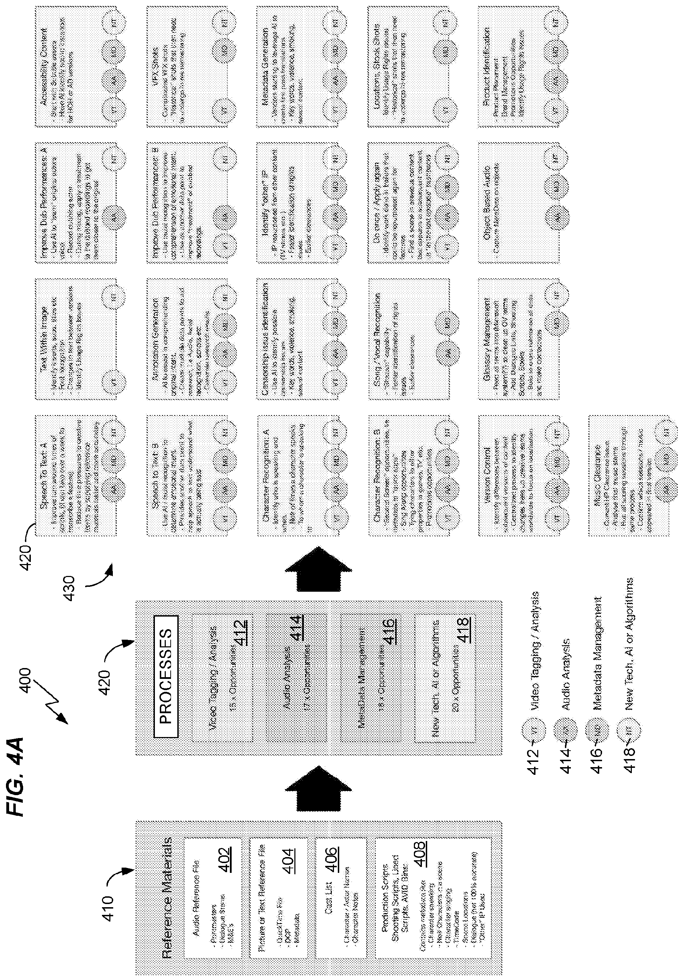

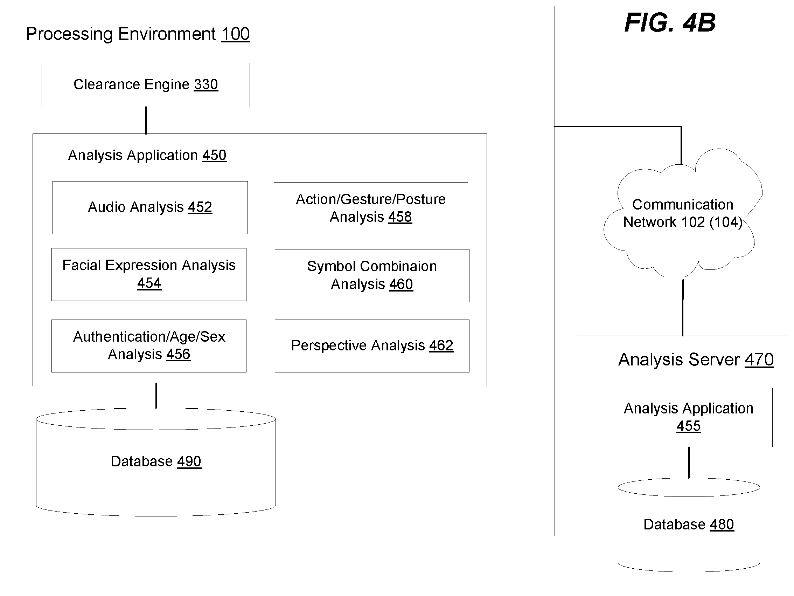

As shown in Fig. 3C, the risk assessment (clearance) engine 330 may be combined with one or more other applications 400, 500, 550 described in connection with Figs. 4A and 4B. Functions of the applications or engines 200, 400, 500, or 550 may be combined variously in any one or plurality of different applications, engines, or modules. The specific arrangement shown in Fig. 3B is for convenient example only.

Fig. 3C shows an overview of a process 300 that accepts input, for example electronic dataset 340 for planning a media production including potential risk elements. The dataset 340 may include text data 341, audio data 342, and image data 343, and outputs a set of risk assessment measures 350 for identified ones of risk elements for storage in a computer memory. A report writing or data formatting module 360 may access the set of risk assessment measures 350 to produce one or more reports, for example, a package of machine-readable metadata 362 or a human-readable media production material 365 formatted to enable a human user 390 to prepare risk assessed content 625 in an efficient manner. The automatic risk assessment process 380 may be used to operate a machine for interacting with humans, for example, a social robot, content curator, or media player.

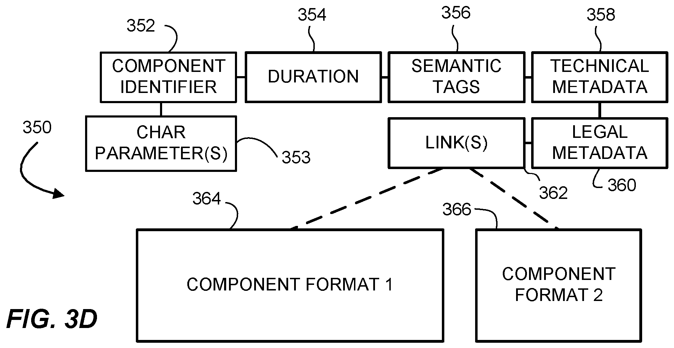

Referring to Fig. 3D, systems, apparatus and methods as described herein may make use of a data structure that relates electronic dataset 340 for planning a media production to one or more parameters for risk assessment, including at least one or more indicators of semantic meaning relevant to one or more context-sensitive factors or events. Fig. 3D shows an example of a data structure 350 for relating content components of electronic dataset 340 each referenced by a component identifier 352 and a character parameter 353 which may include actor or character identity, target (e.g., objects, brands, likenesses) profile including scene focus data and actor handling data, and/or other data. The data structure may be implemented as a relational database, a NoSQL database such as a graph database, a flat data table, a distributed ledger, or by any other useful computer-readable digital data structure for storing, locating and accessing related components of binary-encoded data. The data structure 350 may include self-associated records each including a unique identifier 352 of a content component (e.g., an index number), a character parameter 353 (e.g., classifying the target profile), a duration 354 value (e.g., frames or seconds) of a content segment if applicable, one or more semantic tags 356 relevant to context-sensitive factors or events, technical metadata 358 as needed to select, configure or produce a set of risk assessment measures for identified risk elements, that includes the risk elements identified (referenced) by the identifier 352, legal metadata such as for example copyright, brand, license or censorship requirements applicable to the identified risk elements based on one or more intended geographic distribution territories or all known territories (globally), and one or more links to non-transitory, computer-readable copies 364, 366 of the risk elements. At paragraph 074 with respect to Figure 3D items 356 & 352 there are semantic tags and identifiers that could identify current 'hot spot" geographic territories or current litigation docket issues of concern. We can envision 'heat maps' as visual aids to show where certain issues and/or intended distribution territories may be of special concern, i.e. register high on the risk assessment scale. The copies 364, 366 may be identical copies for redundancy or more efficient distribution, may be copies in different formats (e.g., a large format 364 and a small format 366) for different output modes, or both. It may be efficient to store the copies 364, 366 in a different storage system than the metadata 350 for more efficient operation of the server 200. For example, the server 200 may load the data structure 350 into its Random Access Memory (RAM) and access the component copies 364, 366 on a remote server or local magnetic or electronic memory device.

Fig. 4A illustrates an example of a system 400 for media production risk assessment using a set of functions 430 useful for identifying risk elements in an electronic dataset for planning a media production and generating a set of risk assessment measures for the identified risk elements, that may be generated using methods for media production risk assessment process, as described herein. Inputs 410 ("reference materials") may include an audio reference file 402 with metadata, a picture or text refence file 404 which may be derived from video frames or other image content, with metadata, a cast list 406, and various forms of scripts 408. Processes 420 operating on these or similar inputs may include video tagging and analysis 412, audio analysis 414, metadata management or analysis 416, and machine learning algorithms 418. The processes 420 represent an alternative categorization of the technical processes described in connection with Fig. 2 above. The functions 450 each provide a different information output of the processes 420 coded as 'VT' for video tagging 412, 'AA' for audio analysis 414, 'MM' for metadata management 416 and 'NT' for "new tech" machine learning algorithms 418. For example, the function 422 at upper left describes computerized speech recognition using improved **NT** algorithms 418, metadata management 416 and audio analysis 414. For the sake of brevity, the reader is referred to Fig. 4 for the remaining functions 430 and related outputs. Output from the functions 430 may be used as part of, or an entirety of a set of risk assessment measures for the identified ones of risk elements.

Referring to Fig. 4B, further examples of a method or methods for media production risk assessment, as may be performed by the processing environment 100 or other computing apparatus described herein. In an aspect, an analysis application 450 analyzes the risk elements in the dataset 340 identified by the risk assessment (clearance) engine 330 to determine a set of risk assessment measures for the identified ones of the risk elements, or operates in parallel to the clearance engine 330 to provide additional information from the same text, audio, image, and/or reference information sources. By way of example, the application 450 includes an audio analysis component 452, facial expression analysis component 454, an age/sex analysis component 456, an action/gesture/posture analysis component 458, a symbol combination analysis component 460, and a perspective analysis component 462. Each of the modules or components of the analysis application 450, including the audio analysis 452, the facial expression analysis 454, the age/sex analysis 456, the action/gesture/posture analysis 458, the symbol combination analysis 460, and the perspective analysis 462 cooperate to provide an indication of context-sensitive factors for potential risk elements present in the electronic dataset 340 that is being analyzed. Each of the analysis components matches recognized inputs (text, image or audible) detected by the corresponding detection/recognition modules 331, 332, 333, 334, 335, 336, and 337 to an interpretation of that input relative to a database of electronic records 490. Each of the individual components 452, 454, 456, 458, 460, and 462 isolates and recognizes a 'handling' of a prop, e.g., behavior or condition of an actor interacting with a prop (e.g., objects, brands, and likenesses), which can be compared to a corresponding prior risk element in database 490. As each interaction may have multiple recognized handling occurring simultaneously, the analysis application 450 weighs any combination of inputs and associated handling at a given time and derives a conclusion about a context of the handling of a prop to report feedback on the given inputs.

In some implementations, the analysis application 450 uses a machine learning algorithm to correlate a set of risk assessment measures for the input (e.g., identified ones of risk elements) received from one or more modules of the risk assessment engine 330 as discussed in detail below to one or more symbol combinations appearing in the electronic dataset. Optionally, the machine learning algorithm may be configured to process context-sensitive factors (data) in addition to the input from the clearance engine 330, which may improve accuracy. Context-sensitive factor may include, for example, character speaking, number of characters in a scene, character singing, time code, scene location, dialogue, and so forth. In an aspect, a set of risk assessment measures 410 ; Fig. 3C) may include physical highlighting of one or more digital images (audio or image) corresponding to the risk elements, listing (one or more combinations of text or symbol) of the risk elements, annotation of a need for copyright clearance, e.g., absolute vs. conditional, or other means to bring the risk element to the user's attention. For example, the set of risk assessment measures associated with risk assessment including a level of risk may be altered or removed by the processor, for example, via an annotation application 400, if certain conditions are met. For instance, in an aspect, if the risk element is only partially played or reproduced in the media production, filmed out-of-focus, etc., such that copyright is cleared, the level of risk may be assessed as relatively low. In an aspect, an additional content that is coordinated with the one or more indications of risk assessment may be packaged with an annotated version of the electronic dataset (e.g., script), for example, in case of conditional approval, the element must be used in a specific way (e.g., can only be worn by specific characters), such that the additional content refers to text, audio, or image data illustrating such specific condition. Risk assessment may also factor in one or more intended geographic territories, since legal risks may vary depending on where the content will be distributed or consumed.

In some embodiments, risk assessment for media production can include analysis of audible and image inputs. In some implementations, the audio analysis component 452 determines spoken lines and lyrics expressed in the vocal instances detected by the speech-to-text converter module 331. Audible inputs can include expression, speech and word analysis, word choice and syntactic framing of utterances, and speech pace, rhythm, and pitch contour all provide indications of an analyzed character's expressed or intended emotional state.

In some embodiments, the audio analysis component 452 may implement a process for emotion detection, which in some aspect may be relevant in determining the context-sensitive factors for referents of symbol combinations appearing in the electronic dataset. For example, the audio analysis component 452 may operate by sampling the vocal instances detected by the speech-to-text converter module 331 and breaking it into a continuous sequence of consecutive audio windows each less than one second, for example, 0.5 seconds. The audio analysis component 452 may normalize the volume of each audio window to utilize the full dynamic range of the chosen audio format (e.g., 16 kHz mono). Modeling the audio input as a combination of a linear filter (vocal tract) and excitation signal (vocal cords), the audio analysis component 452 may separate the resonance frequencies (formats) into linear resonances carrying phoneme information and non-linear features mappable to emotional states by linear predictive coding (LPC). Other useful separation processes may include, for example, Mel-frequency cepstral coefficients (MFCC), and perceptual linear prediction (PLP). In addition, the character's gestures, expressions, and body language all reflect emotional state.

The audio analysis component 452 may apply a deep neural network to derive a time-varying sequence of speech features (e.g., phoneme morphologies). The processor parameterizes the non-linear features by any useful model for representing an emotional state of the character/vocal instance. For inferring emotion from audio data, the processor may use a data-driven, machine learning process that produces an n-dimension emotion vector representing an emotional state, where 'n' is a number large enough to represent emotional states that affect facial expression during speech but not so large as to render the training process too specialized to the input. Manual coding of emotional states may provide another option, or generating the emotion vector from other data, for example, non-photographic biometric data collected during recording of the reference video. Any useful method may be used to derive emotion data time-correlated to the character speaking the lines in the reference video, if used.

In some implementations, the facial expression analysis component 454 determines six basic facial expressions such as joy, anger, sadness, and pleasure expressed in the facial expression of a face in the digital image detected by the facial recognition module 335, which in some aspect may be relevant in determining the context-sensitive factors for referents of symbol combinations appearing in the electronic dataset. For example, the facial recognition module 335 may obtain basic facial expression evaluation values corresponding to a happy face, a sad face, an angry face, a fearful face, a disgusted face, and a surprised face, and outputs them as facial expression evaluation values for the detected face in the digital image. The facial recognition module 335 is not limited to the six basic facial expressions such as joy, anger, sadness, and pleasure, but may also calculate other useful evaluation values.

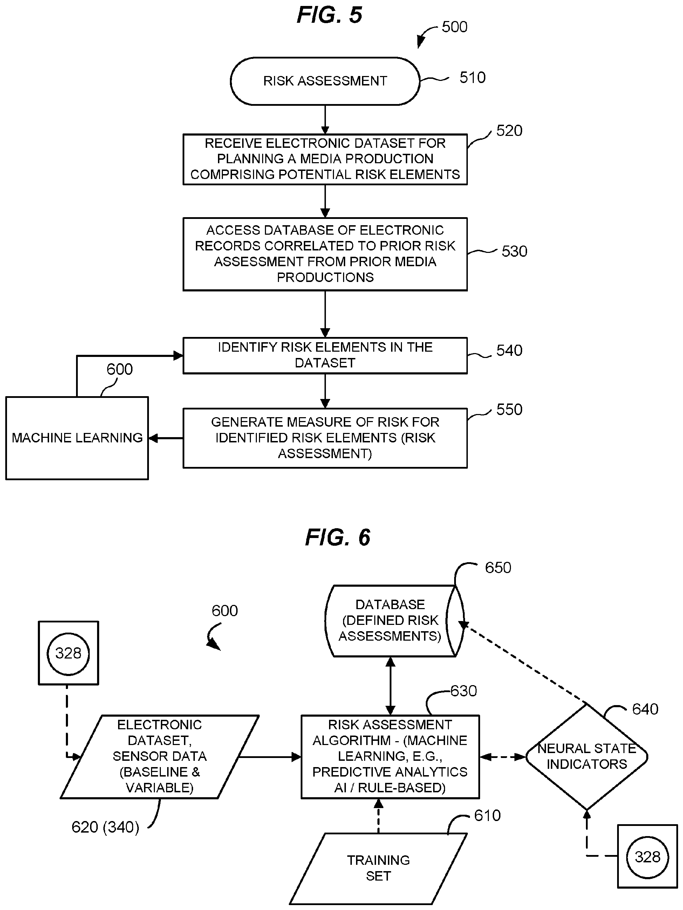

Calculation of evaluation values of the six basic facial expressions such as joy, anger, sadness, and pleasure may be implemented by a known technique in the art. For example, a processor may calculate change amounts for a feature amount of each portion from the difference between a feature amount (e.g., a distance Y1 between a corner of an eye and a corner of the mouth in the Y direction in FIG. 6) of predetermined portion group obtained from an expressionless image prepared in advance and a feature amount (e.g., a vertical distance between a corner of an eye and a corner of the mouth) of predetermined portion group obtained from an input image. The evaluation value (score) for each facial expression is calculated from the change amounts for the predetermined portion group. Alternatively, and as another non-limiting example, determining the facial expression of the detected face in the digital image has three stages: (a) face detection, (b) feature extraction and (c) facial expression recognition. The first phase of face detection may involve skin color detection using YCbCr color model, lighting compensation for getting uniformity on face and morphological operations for retaining the required face portion. The output of the first phase may be used for extracting facial features like eyes, nose, and mouth using AAM (Active Appearance Model) method. The third stage, automatic facial expression recognition, may involve simple Euclidean Distance method. In this method, the Euclidean distance between the feature points of the training images and that of the query image is compared. Based on minimum Euclidean distance, output image expression is decided. Alternatively, the proposed method may be further modified by using Artificial Neuro-Fuzzy Inference System (ANFIS) to give a better recognition rate compared to other known methods. For further example, a deep neural network may perform facial recognition and expression recognition after being trained on a training set.

In some embodiments, the authentication/age/sex analysis component 456 performs an authentication (detection) process for the face of the person (e.g., actors) detected from the received digital image, which in some aspect may be relevant in determining the context-sensitive factors for referents of symbol combinations appearing in the electronic dataset. In an authentication process, either or all of an individual authentication, age authentication, and sex authentication may be performed. Various techniques are known and may be applied to the present disclosure for individual authentication, for example, any useful method for facial recognition as described in connection with facial recognition module 335.

For age authentication, a training set of average faces of the respective age groups may be prepared in advance. Matching may be performed by the facial recognition module 208 between the average face of each age group with the face of the person detected from the received digital image. Using estimation, the age group exhibiting the highest similarity is determined to be the age group to which the face of the person detected from the digital image belongs. In an aspect, average faces of the respective age groups may be generated based on a large quantity of acquired normalized images of the respective age groups (e.g., 0 to 10 years, 10 to 20 years, and 20 to 30 years).

In one or more embodiments, for sex authentication, sex-specific average faces are prepared in advance, and matching is performed by the authentication/age/sex analysis component 456 between the sex-specific average faces and the face of the person detected by the facial recognition module 335. Using estimation, the sex exhibiting the highest similarity is determined to be the sex corresponding to the face of the person detected from the received digital image. Sex-specific average faces may be generated based on a large quantity of acquired normalized images of the respective sex groups.

In some embodiments, the action/gesture/posture analysis component 458 may determine the context or manner of handling a prop (e.g., object, brand, or likeness) by an actor, in association with the action/gesture/posture of the actor appearing in the electronic dataset and detected by a behavior recognition module 335. For example, in some embodiments, the action of a famous professional athlete detected in the received digital image that is drinking a branded sports drink may clear copyright of the brand owner, but not if the sports drink is splashed onto another person. Similarly, an offensive gesture by the famous professional athlete while drinking the branded sports drink, may not clear the copyright or other risks.

In some embodiments, the symbol combination analysis component 460 may use one or more automated learning (e.g., machine or meta learning) methods known in the art to assess the measurements on the different target features extracted by the object recognition module 334, the text/symbol recognition module 336, or the logo detection module 337, using one or more text/symbol/logo/string matching recognition algorithms. Examples of the learning algorithms that may be used as the symbol combination recognition algorithm include, but are not limited to: 1-NN, 3-NN, 10-NN, Decision tree/C4.5, Decision Rules/PART, Kernal Density, KStan, Linear Regression, LWR, Voted Perceptrons, SVM1, SVM2, SVM3, VFI, M5Prime, Naïve Bayes, AidaBoost M1/C4.5, and AidaBoost M1/PART. A given algorithm used by the mood analysis component 560 may indicate the discerned emotion (e.g., calm, happy, etc.) and various internal parameters. The mood analysis component 560 may thus execute different emotion recognition algorithms and produce their respective results and internal parameters.

In some embodiments, the perspective analysis component 462 receives digital image decoded by the decoder 339, which it generates from a dataset 340 received or otherwise accessed by the risk assessment engine 330. In some implementations, the object recognition module 334 or facial/behavior recognition module 335 detects a focus of a scene, for example, by detecting a camera angle or a point of view used to shoot a person or object appearing in the received digital image. The perspective detection (detection of focus of a scene, e.g., via camera angle or point of view) can be performed by using a predetermined algorithm. For example, an algorithm used by the object recognition module 334 or the facial detection module 335 or the like may be used by the perspective analysis component 462. For example, the perspective analysis component 462 may apply photogrammetric relationships with object detection to classify the camera angle relative to actors or other objects appearing in the frame. In an aspect, symbolic indications of detected perspective may be used in a process that automatically generates annotations indicating the classification of camera angle or focus of a scene for use in media production risk assessment.

The analysis server 470 may include an analysis application 455, which includes one or more analysis applications similar or identical to the analysis components 452, 454, 456, 458, 460, and 462. The analysis server 470 may also include a database of electronic records 480, which may be similar or different to the database 490. The functionalities of the analysis application 450 in the present method for media production risk assessment as described herein may be augmented or supplanted by the analysis server 470.

Having described examples of suitable clients, servers, and networks for performing the methods for media production risk assessment, more detailed aspects of these methods will be addressed. The apparatuses 200 and 300 may each perform the methods, alone, or working in cooperation.

Fig. 5 illustrates an overview of the methods 500 for media production risk assessment, which may include related operations in any functional order or in parallel that may be performed by one or more processors (e.g., 202, 214, 302, 310). References will also be made to (elements appearing in) preceding Figs.1-4 and to elements referenced in the subsequent Fig. 6 in discussing Fig. 5.

A media production risk assessment method begins at process 510, when a user, e.g., production staff, begins evaluating assessing risks that may be associated with elements appearing or present in a media production material. As used herein, "production staff" or "media production staff" includes a user (e.g., users of production risk assessment system or apparatus), such as production staff including production leadership such as directors, producers, assistant directors, and other members of the production departments such as the legal clearance department, costume department, set (art) department, props (art) department, hair/makeup department, sound department, camera and electrical department, script department, etc.) interacting with the environment 100 via software or hardware or both using a computer device 101.

At the process 520, one or more processors receive or otherwise access an electronic dataset 340 for planning a media production, the dataset including potential risk elements. At the process 530, the processor(s) access one or more databases (e.g., any one or more of 116, 122, 124, 126, 128, 220, 480, 490, etc.) including electronic records, where each record may be correlated to one or more defined risk elements from one or more prior media productions. In addition, or in an alternative, the one or more processors may determine where the media content is intended to be distributed based on a metadata indicator, and in a downstream process evaluate risk level based in part on the intended geographic distribution. In some aspect, the one or more processors at an analysis server, a device 101, or any other suitable node within the environment 100, may maintain one or more databases of electronic records (e.g., 480, 490; Fig. 4B) relevant to an electronic dataset for planning a media production. The electronic records may be formed and maintained in a data structure of any useful type, for example as described herein above in relation to Fig. 3D. In an aspect, the electronic dataset may include previz materials such as storyboards and 3-D models, and on-set materials (e.g., digital scans such as photos or videos of an actual set) for a media production, for example a movie, an episode of a serial drama, a documentary, an infomercial, a video game, an advertisement, a talk show or social game, or other programs, animated or not. In an aspect, a processor may generate 'heat maps' as visual aids to show where certain issues and/or intended distribution territories may be of special concern, i.e. register high on the risk assessment scale.

At the process 540, the method may include the processor identifying risk elements in the electronic dataset for planning a media production, at least by recognizing or detecting potential risk elements in the electronic dataset, and at least in part by the processor comparing the defined risk elements to potential risk elements detected in the electronic dataset by the processor. In an aspect, the identification of the risk elements, e.g., detection and comparison of potential risk elements with defined risk elements, is based on the sensor data 620, the training set 610, database of defined risk elements 650, or a set of neural state indicators 640 (Fig. 6). In another aspect, the identification of risk elements include predicting a level of risk (e.g., risk of legal violations such as trademark, copyright, and contractual obligations, and other risks associated with media production). For example, in an aspect, a machine learning component or algorithm may be used to predict the level of risk, where the machine-learning component is trained to recognize similarity between the one or more defined risk elements, and one or more referents of one or more symbol combinations appearing in the electronic dataset, or one or more potential risk elements detected in the electronic dataset.

At the process 550, the processor generates a set of risk assessment measures for identified ones of the risk elements, where each of the set of risk assessment measures may be associated with a risk assessment that includes a level of risk. In some embodiments, the risk assessment operation 500 may include using object recognition software, image recognition and analysis software, and/or text/symbol recognition software to capture potential risk elements either in previz materials or actually on set. For example, in an aspect, some prop may have been overlooked previously on-set. In another example, the prop may not have been actually 'handled' by an actor, or the prop was not made the focus of a scene (e.g., due to some on-set improvisation), such that the prop (e.g., object/brand/likeness) was not a 'prop' until the foregoing conditions occurred.

The one or more processors at processes 540, 550 may use a risk assessment algorithm 630, which may be a machine learning algorithm such as a predictive analytics (AI) algorithm, or a rule-based algorithm, or a combination of both, to assess risk for media production. The predictive analytics algorithms may include at least one supervised machine learning (SML) algorithm, for example, one or more of a linear regression algorithm, a neural network algorithm, a support vector algorithm, a naïve Bayes algorithm, a linear classification module or a random forest algorithm. Further details of the structure and operations of the risk assessment algorithm 630 will be discussed below with reference to Figs. 6-11.

Referring to Fig. 6, machine learning, including predictive analytics algorithms, and sometimes referred to as artificial intelligence (AI), can be an efficient tool for uncovering correlations between complex phenomena. As shown in Fig. 6, a system 600 for media production risk assessment based on electronic dataset 340, sensor data 620, training set 610, neural state indicators 640 (and database of prior risk assessments 650, may use a risk assessment algorithm 630, e.g., a machine learning algorithm using artificial intelligence (AI) to assess media production risks. The risk assessment process 630 may receive or otherwise access the electronic dataset 340 (Fig. 3C), such as the sensor data 620, from one or more sensors 328, and the training set 610 may be received or retrieved from one or more of the servers 116,122, 124, 126, 128, 220, 480, 490, and the like. In some aspect of the present disclosure, the sources of the sensor data 620 may include another server, or from an application (or "app"), or from a third-party server. For example, the source may be a server or an application from a media production company or a member of the production staff.

For example, in one aspect, a user uses her smartphone 101 communicably connected to the environment 100 to scan what is on a set and what actors are doing, so that the analysis application 450, 455 may recognize referents such as objects, brands, and likenesses of potential interest for media production risk assessment. In another aspect, the electronic dataset may be received or accessed by the processor from devices 101 or from one or more of the servers 116,122, 124, 126, 128, 220, 480, 490, and the like. For example, the electronic dataset may be an electronic version of previz materials in a suitable electronic file format (e.g., PDF, FDX, etc.), such as storyboards or 3-D models, scripts, set designs, and the like, which may contain text/audio/image data.

It should be noted that instead of or in conjunction with the sensor data 620, any part or combinations of one or more of the data sets (e.g., 341, 342, 343; Fig. 3C) in the electronic dataset 340, defined risk elements in the database 650, and training set 610 may be used, and instead of or in conjunction with the neural state indicators 640, other sensory data detected by sensors 328, or data input by a user via U/I 324 or 314 and the like may be used.

The potential risk elements and defined risk elements may be collected and reviewed by a human, e.g., a production staff, who may assess risks and score the level of risk manually, assisted by automated analysis tools. In an alternative, the level of risk can be scored by human and semi-automatic processing without being classed with similar components. These human-scored and/or machine-scored elements become training data 610 for the predictive analytics process 630. In some embodiments, humans scoring aspects of the risk elements and the level of risk may include one or more of the users, such as via online survey forms or electronic voting using one or more devices that are connected as part of the environment 100.

The machine learning process 630 may compare human and/or machine-determined risk assessments and uses iterative machine learning methods as known in the art to reduce error between the training data and its own estimates.

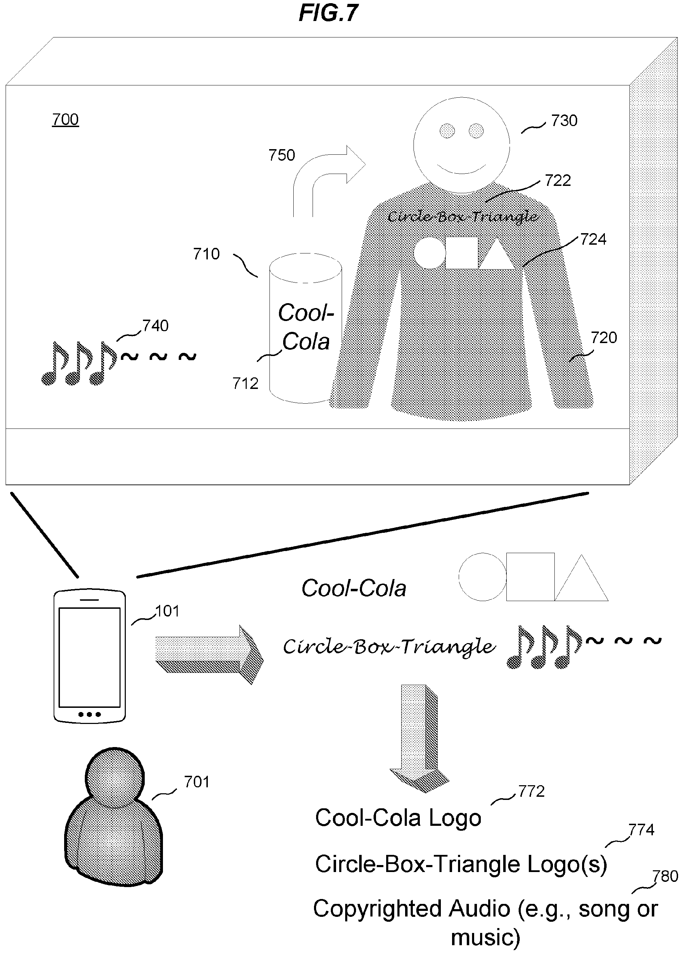

Fig. 7 illustrates one or more embodiments of the aspects of the method for media production risk assessment involving fictional logos, brands, music, and likeness. In an aspect, a user 701 is a production staff involved in a media production. Using a device 101 such as a smartphone or tablet, the user 701 takes an audio/image (e.g., photo, video, and/or sound recording) of a set 700, which serves as an electronic dataset 340 for planning a media production. Alternatively, in another aspect, the electronic dataset 340 may be a pre-viz material such as electronic scripts, storyboards, or 3-D models of a set 700 or props. The processor may detect that the electronic dataset 340 for the set 700 includes, for example, a can of soda 710 bearing a brand name (text/symbol string) and logo 712, a likeness (e.g., actor) 730 wearing a shirt 720 which bears logos 722 and 724, and a music 740 which may be a copyrighted song, where the actor 730 is drinking the soda 710. The example logo 712 correspond to a logo for "Cool-Cola, Inc.," a fictional beverage company. The example logos 722 and 744 correspond to logos for a fictional fashion brand, "Circle-Box-Triangle."

The user may upload the image (e.g., audio-video file) of the set 700 as the electronic dataset to the analysis server, and the processor using the risk assessment engine may process the image to identify one or more of the example logos 712, 722, 724, copyrighted music 740, props 710, 720, likeness 730, and behavior 750. Suppose that the likeness 730 is a professional athlete named "Pro Sam," who is endorsed by Cool-Cola to drink 750 the Cool-Cola soda 710 with a happy face in a media production (Example 1). In such example, the risk assessment engine may determine that the level of risk associated with the logo 712, can 710, likeness 730, and behavior 750 is low, because it is informed of the conditions set by the endorsement contract and it detects that the media elements comply with the conditions.

Suppose instead that in the set 700, Pro Sam appears holding a can of Cool-Cola soda 710, but instead of drinking it, Pro Sam splashes 750 the drink on himself, or that Pro Sam drinks Cool-Soda with a disgusted face, which is not a behavior endorsed by Cool-Cola in the media production, as previously identified or registered by the risk assessment engine (Example 2). In such example, the risk assessment engine may determine that the level of risk associated with the logo 712, can 710, likeness 730, and behavior 750 is high.

Further, suppose that in Example 1, the dataset for the set 700 includes a music 740 playing while the behavior 750 occurs, and the music 740 is an official Cool-Cola song copyrighted by Cool-Cola and endorsed for play in the media production (Example 3). In such example, the risk assessment engine may determine that the level of risk associated with the song 740 is low. Suppose instead that in the Example 3, the music 740 is an official song of a competitor of Cool-Cola, another fictional beverage company called, "Sapsi, Co." (Example 4). In such example, the risk assessment engine may determine that the level of risk associated with the music 740, the can 710, the logo 712, the likeness 730, and the behavior 750 is high. However, in the same Example 4, if the Sapsi, Co. song is only played partially, or at a low volume, etc., such that it is hardly recognizable to human ear or otherwise played in an obfuscating matter, the risk assessment engine may instead determine that the level of risk is not high.

Further, suppose that in Example 1, the likeness 730 is not Pro Sam but instead another actor standing in for Pro Sam, because Pro Sam became ill and the director for the media production decided to use the stand-in to shoot the scene 700; the stand-in 730 is not endorsed by Cool-Cola to drink 750 Cool-Cola 710 in the media production (Example 5). In such example, the risk assessment engine may determine that the level of risk for the can 710, logo 712, likeness 730, and behavior 750 is high. In another aspect, suppose that the shirt 720 bearing the Circle-Box-Triangle logos 722 and 724 is worn by Pro Sam 730, who is authorized by Circle-Box-Triangle to do so, but only if the logo 722 and the logo 724 appear together and not individually (Example 6). In such case, the risk assessment engine may determine that the level of risk associated with the shirt 720, likeness 730, and logos 722, 724 are low, but is high if the one of the logos 722 and 724 is missing on the shirt 720.

Further, suppose instead that in the same example, Circle-Box-Triangle does not authorize its logos to appear in the same scene, if another brand is made a focus of the scene. In case Pro Sam 730 wearing the shirt 720 bearing the logos 722 and 724 is shown drinking a soda 710, where the Cool-Cola logo 712 is either obscured from view or otherwise entirely made a focus of the scene (e.g., the Cool-Cola logo 712 is somewhat out of focus and not entirely clearly visible), the risk assessment engine may determine that the level of risk associated with the logo 712, shirt 720, logos 722, 724, and likeness 730, is relatively low, e.g., expressed as a numeral value (e.g., expressed as a score value on a predetermined scale or a percentage value) representing the level of risk, depending on the level of obfuscation of the other brand (Example 7).

For instance, in Example 7, if the Cool-Cola logo 712 is blurred (out of focus) to 40% of clarity, the risk assessment engine may determine that the level of risk associated with the logo 712, shirt 720, logos 722, 724, and likeness 730 is 40%, 4 out of 10, etc. Further, suppose that Pro Sam730 is authorized to wear a shirt 720 bearing the Circle-Box-Triangle logos 722 and 724, but not if Pro Sam is wearing a beard (Example 8). If the director shoots a scene of Pro Sam 730 wearing a shirt 720 bearing the Circle-Box-Triangle logos 722, 724 while wearing a full beard, then the risk assessment engine may determine that the level of risk associated with the shirt 720, logos 722, 724, and likeness 730 is high.

In all of the foregoing Examples, the context-sensitive factors affecting the risk assessment including the level of risk may be pre-registered or otherwise added as part of the database of electronic records (e.g., 480, 490), and as part of the data structure 350 (e.g., parameters, metadata, or tags 353, 354, 356, 358, 360, etc.), and the risk assessment including the level of risk may be expressed as a numeral value (e.g., expressed as a score value on a predetermined scale or a percentage value), similar to the case in Example 7.

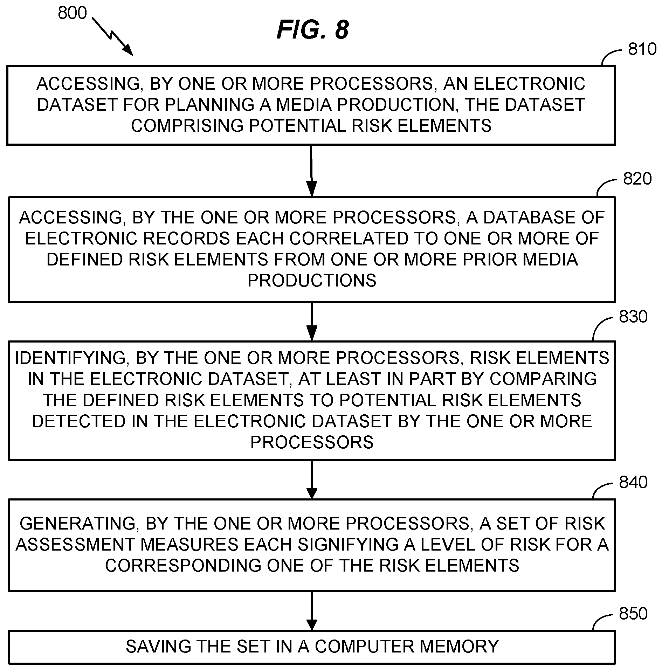

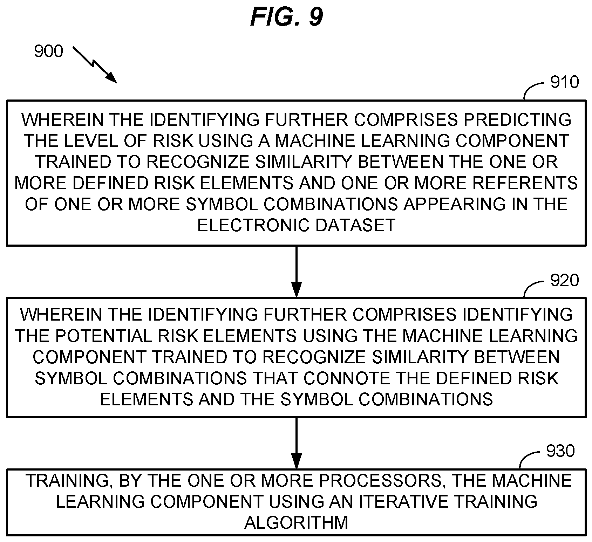

In accordance with the foregoing, Fig. 8 is a flow chart illustrating aspects of a useful automatic method 800 for media production risk assessment, and Figs. 9-11 are flow charts illustrating further optional aspects or operations of the method diagrammed in Fig. 8. In an aspect of the disclosure, the method 800 may be performed by one or more processors at a risk assessment server or other servers, and devices described herein, and may include other details described elsewhere herein.

At 810, a processor receives or otherwise accesses an electronic dataset for planning a media production, the dataset including potential risk elements. In an aspect the processor will identify risk elements based on current risk information in addition to legacy or prior information used for training a machine learning component. For example, in one aspect, receiving or otherwise accessing the dataset may include receiving data (e.g., images of a set) from a smartphone communicably connected to the risk assessment engine or server to capture an image (e.g., photo, video, and/or audio recording) of a set in a media production. Alternatively, the dataset may be an electronic version of a media production material, such as a script, pre-viz materials, or on-set videos, which may be stored in an electronic file such as PDF, FDX, etc., and provided separately via electronic communication or transmission to the risk assessment engine or server.

At 820, the processor accesses a database of electronic records each correlated to one or more of defined risk elements from one or more prior media productions or to a new risk element relevant to the production for its intended areas of geographic distribution, or globally. In an aspect, the accessing may include selecting or assembling the database of electronic records. For example, the prior media productions may include a corpus of actually produced audio video work of, for example entertainment, instructional information, video gaming, advertisement, and social networking, such has movies or episodic shows, which may or may not have direct serial relationship with the media production at hand. For further example, a prior media production may be a prior episode of an episodic show or a movie series, and the media production at hand may be a sequel thereto. In another example, the prior media production may include appearance of the same or similar actor(s) and/or same or similar risk elements such as props (e.g., objects, brands, likenesses), text (e.g., logos), and audio (e.g., songs and music). In an aspect, at least one of the selecting or assembling may include use of a predictive algorithm. For example, the method 800 may further include, by one or more processors predicting similarity between the one or more defined risk elements and the potential risk elements, using a predictive algorithm, for example, a machine-learning algorithm based on a deep neural network trained to single out props, brands, or likenesses. Such an algorithm may include, for example a trained machine learning process or a rules-based algorithm that weights and compares characteristics of the defined risk elements and one or more referents of one or more symbol combinations present in the electronic dataset.

At 830, the one or more processors identify risk elements in the electronic dataset, at least in part by comparing the defined risk elements to potential risk elements detected in the electronic dataset by the one or more processors. In an aspect, at least one of the comparing or detecting may include use of a machine learning such as a predictive algorithm. Such an algorithm may include, for example a trained machine learning process or a rules-based algorithm that weights and compares potential risk elements to electronic dataset identifiers such as semantic tags and metadata in defined risk elements. Further aspects of machine learning implementation of the recited "comparing" are described herein above, for example in connection with Figs. 3B-6.

At 840, the processor generates a set of risk assessment measures for identified ones of the risk elements, each of the set of risk assessment measures associated with a risk assessment including a level of risk. In an aspect, the determination of a risk assessment including a level of risk may include use of a predictive machine-learning algorithm. For example, the method 800 may further include, by one or more processors predicting the level of risk using a machine-learning algorithm based on a deep neural network trained on one or more prior risk elements and one or more referents of potential risk elements present in, or one or more symbol combinations appearing in, the electronic dataset. Such an algorithm may include, for example a trained machine learning process or a rules-based algorithm that weights and compares electronic dataset identifiers such as semantic tags and metadata in defined risk elements and potential risk elements. In an alternative, or in addition, generating the risk assessment measures may include use of a rule-based algorithm to sort and classify the identified risk elements using a system or prioritized rules.

At 850, the processor saves the set of risk assessment measures in a computer memory, such as a memory module within a client device or a server, or a storage in any of the foregoing.

Figs. 9-11 show additional operations 900-1120 that may optionally be included in the method 900 and performed by one or more processors performing the method 800, in any operative order. Any one or more of the additional operations 900-1120 may be omitted unless needed by a downstream operation and one or more of the operations 900-1120 may replace one or more others of the operations of the method 800. Any useful combination of operations selected from the group consisting of the operations 900-1120 may be performed by one or more processors of an apparatus as described herein as an independent method distinct from other useful combinations selected from the same group.

Referring to Fig. 9, at 910, the one or more processors perform the identifying, wherein the identifying further includes predicting the level of risk using a machine learning component trained to recognize similarity between the one or more defined risk elements and one or more referents of one or more symbol combinations appearing in the electronic dataset. For example, the prior risk element may be a prop, the symbol combination may be an image of a logo, and the referent may be a brand (e.g., trademark or trade name).

At 920, the one or more processors perform the identifying, wherein the identifying further includes identifying the potential risk elements using the machine learning component trained to recognize similarity between symbol combinations that connote the defined risk elements and the symbol combinations. For example, the symbol combinations may be a logo or a derivative thereof.

At 930, the one or more processors train the machine learning component using an iterative training algorithm. See discussion in connection with Fig. 6, for example.

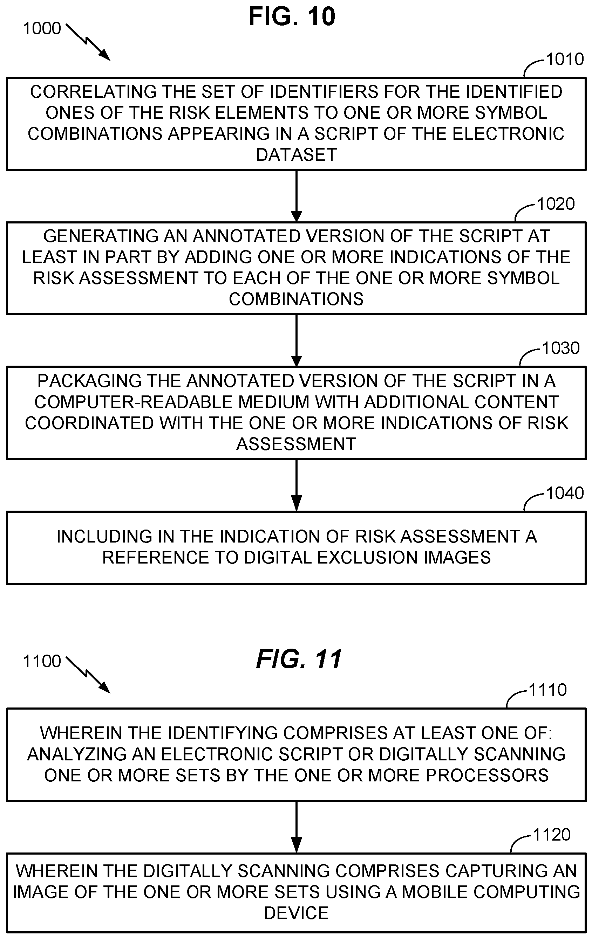

Referring to Fig. 10, at 1010, the one or more processors correlate the set of risk assessment measures for the identified ones of the risk elements to one or more symbol combinations appearing in a script of the electronic dataset. For example, the set of risk assessment measures may include identities of the actors and text strings or graphic image representing brand logos.

At 1020, the one or more processors generate an annotated version of the script at least in part by adding one or more indications of the risk assessment to each of the one or more symbol combinations. For example, the one or more indications may be a textual, numerical, graphical, or other human-cognizable representation of the level of risk associated with the one or more symbol combinations or potential risk elements.

At 1030, the one or more processors package the annotated version of the script in a computer-readable medium with additional content coordinated with the one or more indications of risk assessment. For example, the computer-readable medium may be an electronic file in a suitable file format, e.g., PDF, FDX, which may be used by a production staff.

At 1010, the one or more processors include in the indication of risk assessment a reference to digital exclusion images. For example, digital exclusion images may include an object, brand, likeness, or context-sensitive factor that reduces or negates a level of risk. In an alternative, or in addition, the one or more processors may instead of indicating that certain items (visuals or audio) ought not be included to mitigate clearance risk may reduce risk by implementing so-called 'diminished reality' technology and methods. A survey of many such diminished reality technologies is described in "A Survey Of Diminished Reality: Techniques For Visually Concealing, Eliminating, And Seeing Through Real Objects" by Shohei Mori, Sei Ikeda, and Hideo Saito. In this manner, not only would the system identify potential clearance risk items or issues with risk assessments; the system could also suggest some method(s) to resolve the issues, e.g. by removing the problematic item and showing the resulting content for quality assessment. In an aspect, the processor may perform diminished reality processing after principal photograph or other original image origination, during editing for example.

Referring to Fig. 11, at 1110, the one or more processors perform the method 800 wherein the identifying comprises at least one of: analyzing an electronic script or digitally scanning one or more sets by the one or more processors. For example, the electronic script may be a PDF of FDX file, and the digital scan of a set may include using one or more sensors to capture an image of a set.

At 1120, the one or more processors perform the method 800 wherein the digitally scanning comprises capturing an image of the one or more sets using a mobile computing device. For example, the mobile computing device may include a smartphone, a tablet, a smart device, a wearable device, a digital camera, and the like.

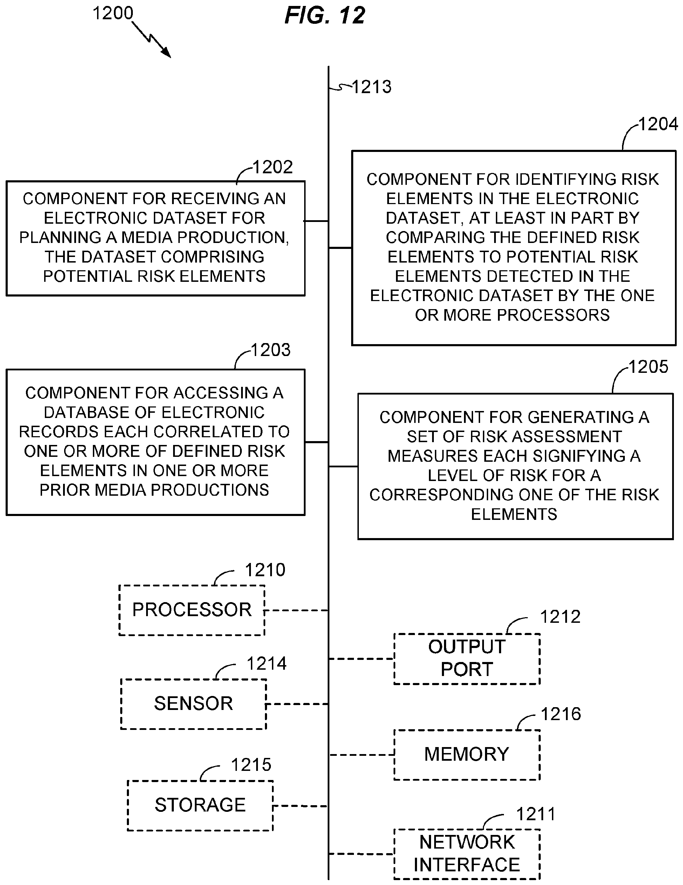

Referring to Fig. 12, components of an apparatus or system 1200 for media production risk assessment as described herein are illustrated as examples. The apparatus or system 1200 may include additional or more detailed components for performing functions or process operations as described herein. As depicted, the apparatus or system 1200 may include functional blocks that can represent functions implemented by a processor, software, or combination thereof (e.g., firmware).

As illustrated in Fig. 12, the apparatus or system 1200 may include an electrical component 1202 for receiving or otherwise accessing an electronic dataset for planning a media production, the dataset comprising potential risk elements. The component 1202 may be, or may include, a means for said receiving or accessing. Said means may include the processor 1210 coupled to the memory 1216, a network interface 1211, a sensor (array) 1214, a storage 1215, an output port 1212, and a bus 1213, the processor executing an algorithm based on program instructions stored in the memory. In an aspect, the electronic dataset may be received from external systems via the network interface. Such algorithm may include a sequence of more detailed operations, for example, establishing a communication session with a client device associated with at least one user using the device (e.g., smartphone or tablet) to scan what is on set and what actors are doing, or to access or transfer an electronic document or image.

The apparatus 1200 may further include an electrical component 1203 for accessing a database of electronic records each correlated to one or more of defined risk elements from one or more prior media productions. The component 1203 may be, or may include, a means for said accessing. Said means may include the processor 1210 coupled to the memory 1216, a network interface 1211, a sensor (array) 1214, a storage 1215, an output port 1212, and a bus 1213, the processor executing an algorithm based on program instructions stored in the memory. Such algorithm may include a sequence of more detailed operations, for example, as shown in Figs. 3C, 4B, and 6.

The apparatus 1200 may further include an electrical component 1204 for identifying risk elements in the electronic dataset, at least in part by comparing the defined risk elements to potential risk elements detected in the electronic dataset by the one or more processors. The component 1204 may be, or may include, a means for said identifying. Said means may include the processor 1210 coupled to the memory 1216, a network interface 1211, a sensor (array) 1214, a storage 1215, an output port 1212, and a bus 1213, the processor executing an algorithm based on program instructions stored in the memory. Such algorithm may include a sequence of more detailed operations, for example, as shown and described in connection with Fig. 6, including a machine-learning or rules-based algorithm.

The apparatus 1200 may further include an electrical component 1205 for generating a set of risk assessment measures each signifying a level of risk for a corresponding one of the risk elements. The component 1205 may be, or may include, a means for said generating. Said means may include the processor 1210 coupled to the memory 1216, a network interface 1211, a sensor (array) 1214, a storage 1215, an output port 1212, and a bus 1213, the processor executing an algorithm based on program instructions stored in the memory. Such algorithm may include a sequence of more detailed operations, for example, as shown and described in connection with Fig 7.

In related aspects, the apparatus 1200 may include a network interface module 1211 operable for communicating with system components over a computer network, or communicating with any external storage device, with external systems or servers, or connected vehicles over a computer network. A network interface 1211 module may be, or may include, for example, an Ethernet port or serial port (e.g., a Universal Serial Bus (USB) port), a Wi-Fi interface, or a cellular telephone interface. In further related aspects, the apparatus 1200 may include a module for storing information, such as, for example, a storage 1215, or a memory device 1216, that stores or saves the set of risk assessment measures. The computer readable medium 1215 or the memory module 1216 may be operatively coupled to the other components of the apparatus 1200 via the bus 1213, via the network interface 1211, or the like. The storage 1215 or the memory module 1216 may be adapted to store computer readable instructions and data for effecting the processes and behavior of the modules 1202-1205, and subcomponents thereof, or the processor 1210, the method 800 and one or more of the additional operations 900-1120 disclosed herein, or any method for performance by risk assessment engine or server described herein. The memory module 1216 may retain instructions for executing functions associated with the modules 1202-1205 and any one or more of the operations described herein, for example in connection with one or more of Figs. 3B-7. While shown as being external to the memory 1216, it is to be understood that the modules 1202-1205 can exist within the memory 1216 or an on-chip memory of the processor 1210.

The apparatus 1200 may include a transceiver 1212 configured as a wireless transmitter/receiver, or a wired transmitter/receiver, for transmitting and receiving a communication signal to/from another system component such as, for example, an RFID tag or location information transmitter. In alternative embodiments, the processor 1210 may include networked microprocessors from devices operating over a computer network. The apparatus 1200 may include, or may be connected to, one or more position or biometric sensors 1214, which may be of any suitable types. Various examples of suitable sensors are described herein above.

Those of skill would further appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

As used in this application, the terms "component", "module", "system", and the like are intended to refer to a computer-related entity, either hardware, a combination of hardware and software, software, or software in execution. For example, a component or a module may be, but are not limited to being, a process running on a processor, a processor, an object, an executable, a thread of execution, a program, and/or a computer. By way of illustration, both an application running on a server and the server can be a component or a module. One or more components or modules may reside within a process and/or thread of execution and a component or module may be localized on one computer and/or distributed between two or more computers.

Various aspects will be presented in terms of systems that may include a number of components, modules, and the like. It is to be understood and appreciated that the various systems may include additional components, modules, etc. and/or may not include all of the components, modules, etc. discussed in connection with the figures. A combination of these approaches may also be used. The various aspects disclosed herein can be performed on electrical devices including devices that utilize touch screen display technologies, heads-up user interfaces, wearable interfaces, and/or mouse-and-keyboard type interfaces. Examples of such devices include VR output devices (e.g., VR headsets), AR output devices (e.g., AR headsets), computers (desktop and mobile), televisions, digital projectors, smart phones, personal digital assistants (PDAs), and other electronic devices both wired and wireless.

In addition, the various illustrative logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device (PLD) or complex PLD (CPLD), discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

Operational aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, digital versatile disk (DVD), Blu-ray^{™}, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a client device or server. In the alternative, the processor and the storage medium may reside as discrete components in a client device or server.

Furthermore, the one or more versions may be implemented as a method, apparatus, or article of manufacture using standard programming and/or engineering techniques to produce software, firmware, hardware, or any combination thereof to control a computer to implement the disclosed aspects. Non-transitory computer readable media can include but are not limited to magnetic storage devices (e.g., hard disk, floppy disk, magnetic strips, or other format), optical disks (e.g., compact disk (CD), DVD, Blu-ray^{™} or other format), smart cards, and flash memory devices (e.g., card, stick, or other formats). Of course, those skilled in the art will recognize many modifications may be made to this configuration within the scope of the disclosed aspects.

In view of the exemplary systems described supra, methodologies that may be implemented in accordance with the disclosed subject matter have been described with reference to several flow diagrams. While for purposes of simplicity of explanation, the methodologies are shown and described as a series of blocks, it is to be understood and appreciated that the claimed subject matter is not limited by the order of the blocks, as some blocks may occur in different orders and/or concurrently with other blocks from what is depicted and described herein. Moreover, not all illustrated blocks may be required to implement the methodologies described herein. Additionally, it should be further appreciated that the methodologies disclosed herein are capable of being stored on an article of manufacture to facilitate transporting and transferring such methodologies to computers.

The previous description of the disclosed aspects is provided to enable any person skilled in the art to make or use the present disclosure. Various modifications to these aspects will be readily apparent to those skilled in the art, and the generic principles defined herein may be applied to other embodiments within the scope of the disclosure. Thus, the present disclosure is not intended to be limited to the embodiments shown herein but is to be accorded the widest scope consistent with the appended claims.

## Claims

1. A computer-implemented method for media production risk assessment comprising:
accessing, by one or more processors, an electronic dataset for planning a media production, the dataset comprising potential risk elements;
accessing, by the one or more processors, a database of electronic records each correlated to one or more of defined risk elements from one or more prior media productions;
identifying, by the one or more processors, risk elements in the electronic dataset, at least in part by comparing the defined risk elements to potential risk elements detected in the electronic dataset by the one or more processors;
generating, by the one or more processors, a set of risk assessment measures each signifying a level of risk for a corresponding one of the risk elements comprising a level of risk; and
saving the set in a computer memory.

2. The method of claim 1, wherein the identifying further comprises predicting the level of risk using a machine learning component trained to recognize similarity between the one or more prior risk elements and one or more referents of one or more symbol combinations appearing in the electronic dataset.

3. The method of claim 1, further comprising correlating the set of risk assessment measures to one or more symbol combinations appearing in a script of the electronic dataset.

4. The method of claim 3, further comprising generating an annotated version of the script at least in part by adding one or more indications of the risk assessment to each of the one or more symbol combinations, and optionally further comprising packaging the annotated version of the script in a computer-readable medium with additional content coordinated with the one or more indications of risk assessment, or further comprising by the one or more processors, including in the indication of risk assessment a reference to digital exclusion images.

5. The method of claim 1, wherein the identifying comprises at least one of: analyzing an electronic script or digitally scanning one or more sets by the one or more processors, and optionally, when the identifying comprises digitally scanning one or more sets by the one or more processors, wherein the digitally scanning comprises capturing an image of the one or more sets using a mobile computing device.

6. The method of claim 2, wherein the identifying further comprises identifying the potential risk elements using the machine learning component trained to recognize similarity between symbol combinations that connote the defined risk elements and the symbol combinations.

7. The method of claim 2 further comprising training, by the one or more processors, the machine learning component using an iterative training algorithm.

8. The method of claim 1, further comprising by the one or more processors adjusting the risk assessment based on context-sensitive factors for referents of symbol combinations appearing in the electronic dataset.

9. An apparatus for automatic assessment of clearance risks in media production, the apparatus comprising at least one processor coupled to a memory, the memory holding program instructions that when executed by the at least one processor cause the apparatus to perform:
accessing an electronic dataset for planning a media production, the dataset comprising potential risk elements;
accessing a database of electronic records each correlated to one or more of defined risk elements from one or more prior media productions;
identifying risk elements in the electronic dataset, at least in part by comparing the defined risk elements to potential risk elements detected in the electronic dataset by the one or more processors;
generating a set of risk assessment measures each signifying a level of risk for a corresponding one of the risk elements comprising a level of risk; and
saving the set in a computer memory.

10. The apparatus of claim 9, wherein the memory holds further instructions for the identifying at least in part by predicting the level of risk using a machine learning component trained to recognize similarity between the one or more defined risk elements and one or more referents of one or more symbol combinations appearing in the electronic dataset, and optionally wherein the memory holds further instructions for training, by the one or more processors, the machine learning component using an iterative training algorithm.

11. The apparatus of claim 9, wherein the memory holds further instructions for correlating the set of risk assessment measures to one or more symbol combinations appearing in a script of the electronic dataset.

12. The apparatus of claim 11, wherein the memory holds further instructions for generating an annotated version of the script at least in part by adding one or more indications of the risk assessment to each of the one or more symbol combinations, and optionally wherein the memory holds further instructions for packaging the annotated version of the script in a computer-readable medium with additional content coordinated with the one or more indications of risk assessment, or wherein the memory holds further instructions for including in the indication of risk assessment a reference to digital exclusion images.

13. The apparatus of claim 9, wherein the memory holds further instructions for the identifying by at least one of: analyzing an electronic script or digitally scanning one or more sets by the one or more processors, and optionally, when the identifying is by digitally scanning one or more sets by the one or more processors, wherein the memory holds further instructions for the digitally scanning by capturing receiving an image of the one or more sets from a mobile computing device.

14. The apparatus of claim 10, wherein the memory holds further instructions for the identifying at least in part by identifying the potential risk elements using the machine learning component trained to recognize similarity between symbol combinations that connote the defined risk elements and the symbol combinations.

15. The apparatus of claim 9, wherein the memory holds further instructions for adjusting the risk assessment based on context-sensitive factors for referents of symbol combinations appearing in the electronic dataset.

## Patentansprüche

1. Computerimplementiertes Verfahren zur Medienproduktionsrisikobewertung, umfassend:
Zugreifen, durch einen oder mehrere Prozessoren, auf einen elektronischen Datensatz zum Planen einer Medienproduktion, wobei der Datensatz mögliche Risikoelemente umfasst;
Zugreifen, durch den einen oder die mehreren Prozessoren, auf eine Datenbank von elektronischen Datensätzen, die jeweils mit einem oder mehreren von definierten Risikoelementen von einer oder mehreren vorherigen Medienproduktionen korreliert sind;
Identifizieren, durch den einen oder die mehreren Prozessoren, von Risikoelementen in dem elektronischen Datensatz, zumindest teilweise durch Vergleichen der definierten Risikoelemente mit möglichen Risikoelementen, die durch den einen oder die mehreren Prozessoren in dem elektronischen Datensatz detektiert wurden;
Erzeugen, durch den einen oder die mehreren Prozessoren, eines Satzes von Risikobewertungsmaßnahmen, die jeweils ein Niveau eines Risikos für ein entsprechendes der Risikoelemente, die ein Niveau eines Risikos umfassen, kennzeichnen; und
Speichern des Satzes in einem Computerspeicher.

2. Verfahren nach Anspruch 1, wobei das Identifizieren ferner Vorhersagen des Niveaus eines Risikos unter Verwendung einer Komponente für maschinelles Lernen umfasst, die dazu trainiert ist, Ähnlichkeiten zwischen dem einen oder den mehreren vorherigen Risikoelementen und einem oder mehreren Bezugspunkten einer oder mehrerer Symbolkombinationen, die in dem elektronischen Datensatz erscheinen, zu erkennen.

3. Verfahren nach Anspruch 1, ferner umfassend Korrelieren des Satzes von Risikobewertungsmaßnahmen mit einer oder mehreren Symbolkombinationen, die in einem Skript des elektronischen Datensatzes erscheinen.

4. Verfahren nach Anspruch 3, ferner umfassend Erzeugen einer kommentierten Version des Skripts zumindest teilweise durch Hinzufügen einer oder mehrerer Angaben der Risikobewertung zu jeder der einen oder der mehreren Symbolkombinationen, und gegebenenfalls ferner umfassend Verpacken der kommentierten Version des Skripts in einem computerlesbaren Medium mit zusätzlichem Inhalt, der mit der einen oder den mehreren Angaben einer Risikobewertung koordiniert ist, oder ferner umfassend, durch den einen oder die mehreren Prozessoren, Einschließen eines Bezugs zu digitalen Ausschlussbildern in der Angabe einer Risikobewertung.

5. Verfahren nach Anspruch 1, wobei das Identifizieren mindestens eines von Folgendem umfasst: Analysieren eines elektronischen Skripts oder digitales Abtasten eines oder mehrerer Sätze durch den einen oder die mehreren Prozessoren und gegebenenfalls, wenn das Identifizieren digitales Abtasten eines oder mehrerer Sätze durch den einen oder die mehreren Prozessoren umfasst, wobei das digitale Abtasten Aufnehmen eines Bildes des einen oder der mehreren Sätze unter Verwendung einer mobilen Rechenvorrichtung umfasst.

6. Verfahren nach Anspruch 2, wobei das Identifizieren ferner Identifizieren der möglichen Risikoelemente unter Verwendung der Komponente für maschinelles Lernen umfasst, die dazu trainiert ist, Ähnlichkeiten zwischen Symbolkombinationen zu erkennen, die die definierten Risikoelemente und die Symbolkombinationen bezeichnen.

7. Verfahren nach Anspruch 2, ferner umfassend Trainieren, durch den einen oder die mehreren Prozessoren, der Komponente für maschinelles Lernen unter Verwendung eines iterativen Trainingsalgorithmus.

8. Verfahren nach Anspruch 1, ferner umfassend, durch den einen oder die mehreren Prozessoren, Einstellen der Risikobewertung auf Grundlage von kontextsensitiven Faktoren für Bezugspunkte von Symbolkombinationen, die in dem elektronischen Datensatz erscheinen.

9. Vorrichtung zur automatischen Bewertung von Freigaberisiken bei der Medienproduktion, wobei die Vorrichtung mindestens einen Prozessor umfasst, der an einen Speicher gekoppelt ist, wobei der Speicher Programmanweisungen enthält, die bei Ausführung durch den mindestens einen Prozessor die Vorrichtung zu Folgendem veranlassen:
Zugreifen auf einen elektronischen Datensatz zum Planen einer Medienproduktion, wobei der Datensatz mögliche Risikoelemente umfasst;
Zugreifen auf eine Datenbank von elektronischen Datensätzen, die jeweils mit einem oder mehreren von definierten Risikoelementen von einer oder mehreren vorherigen Medienproduktionen korreliert sind;
Identifizieren von Risikoelementen in dem elektronischen Datensatz, zumindest teilweise durch Vergleichen der definierten Risikoelemente mit möglichen Risikoelementen, die durch den einen oder die mehreren Prozessoren in dem elektronischen Datensatz detektiert wurden;
Erzeugen eines Satzes von Risikobewertungsmaßnahmen, die jeweils ein Niveau eines Risikos für ein entsprechendes der Risikoelemente, die ein Niveau eines Risikos umfassen, kennzeichnen; und
Speichern des Satzes in einem Computerspeicher.

10. Vorrichtung nach Anspruch 9, wobei der Speicher weitere Anweisungen zum Identifizieren zumindest teilweise durch Vorhersagen des Niveaus eines Risikos unter Verwendung einer Komponente für maschinelles Lernen enthält, die dazu trainiert ist, Ähnlichkeiten zwischen dem einen oder den mehreren definierten Risikoelementen und einem oder mehreren Bezugspunkten einer oder mehrerer Symbolkombinationen, die in dem elektronischen Datensatz erscheinen, zu erkennen, und wobei gegebenenfalls der Speicher weitere Anweisungen zum Trainieren, durch den einen oder die mehreren Prozessoren, der Komponente für maschinelles Lernen unter Verwendung eines iterativen Trainingsalgorithmus enthält.

11. Vorrichtung nach Anspruch 9, wobei der Speicher weitere Anweisungen zum Korrelieren des Satzes von Risikobewertungsmaßnahmen mit einer oder mehreren Symbolkombinationen, die in einem Skript des elektronischen Datensatzes erscheinen, enthält.

12. Vorrichtung nach Anspruch 11, wobei der Speicher weitere Anweisungen zum Erzeugen einer kommentierten Version des Skripts zumindest teilweise durch Hinzufügen einer oder mehrerer Angaben der Risikobewertung zu jeder der einen oder der mehreren Symbolkombinationen enthält und wobei der Speicher gegebenenfalls weitere Anweisungen zum Verpacken der kommentierten Version des Skripts in einem computerlesbaren Medium mit zusätzlichem Inhalt, der mit der einen oder den mehreren Angaben einer Risikobewertung koordiniert ist, enthält oder wobei der Speicher weitere Anweisungen zum Einschließen eines Bezugs zu digitalen Ausschlussbildern in der Angabe einer Risikobewertung enthält.

13. Vorrichtung nach Anspruch 9, wobei der Speicher weitere Anweisungen zum Identifizieren durch mindestens eines von Folgendem enthält: Analysieren eines elektronischen Skripts oder digitales Abtasten eines oder mehrerer Sätze durch den einen oder die mehreren Prozessoren und gegebenenfalls, wenn das Identifizieren durch digitales Abtasten eines oder mehrerer Sätze durch den einen oder die mehreren Prozessoren erfolgt, wobei der Speicher weitere Anweisungen zum digitalen Abtasten durch Aufnehmen des Empfangs eines Bildes des einen oder der mehreren Sätze von einer mobilen Rechenvorrichtung enthält.

14. Vorrichtung nach Anspruch 10, wobei der Speicher weitere Anweisungen zum Identifizieren zumindest teilweise durch Identifizieren der möglichen Risikoelemente unter Verwendung der Komponente für maschinelles Lernen enthält, die dazu trainiert ist, Ähnlichkeiten zwischen Symbolkombinationen zu erkennen, die die definierten Risikoelemente und die Symbolkombinationen bezeichnen.

15. Vorrichtung nach Anspruch 9, wobei der Speicher weitere Anweisungen zum Einstellen der Risikobewertung auf Grundlage von kontextsensitiven Faktoren für Bezugspunkte von Symbolkombinationen, die in dem elektronischen Datensatz erscheinen, enthält.

## Revendications

1. Un procédé mis en œuvre par ordinateur d'évaluation du danger de production de contenus multimédias comprenant :
accéder, par un ou plusieurs processeurs, à un ensemble électronique de données pour planifier une production de contenus multimédias, l'ensemble de données comprenant des éléments potentiels de danger ;
accéder, par le un ou les plusieurs processeurs, à une base de données d'enregistrements électroniques, corrélés chacun à un ou à plusieurs éléments définis de danger à partir d'une ou de plusieurs productions antérieures de contenus multimédias ;
identifier, par le un ou les plusieurs processeurs, des éléments de danger dans l'ensemble électronique de données en comparant, au moins en partie, les éléments définis de danger à des éléments potentiels de danger détectés dans l'ensemble électronique de données par le un ou les plusieurs processeurs ;
créer, par le un ou les plusieurs processeurs, un ensemble de mesures d'évaluation de danger signifiant chacune un niveau de danger pour l'un correspondant des éléments de danger comprenant un niveau de danger ; et
sauvegarder l'ensemble dans une mémoire d'ordinateur.

2. Le procédé de la revendication 1, dans lequel l'identification comprend en outre prédire le niveau de danger en utilisant un composant d'apprentissage par machine, entraîné à reconnaître une similarité entre le un ou les plusieurs éléments antérieurs de danger et un ou plusieurs référents d'une ou plusieurs combinaisons de symboles apparaissant dans l'ensemble électronique de données.

3. Le procédé de la revendication 1, comprenant en outre corréler l'ensemble de mesures d'évaluation de danger à une ou plusieurs combinaisons de symboles apparaissant dans un script de l'ensemble électronique de données.

4. Le procédé de la revendication 3, comprenant en outre créer une version annotée du script en ajoutant au moins en partie une ou plusieurs indications de l'évaluation de danger à chacune de la une ou des plusieurs combinaisons de symboles et comprenant en outre, éventuellement, conditionner la version annotée du script dans un support déchiffrable par ordinateur avec du contenu supplémentaire coordonné avec la une ou les plusieurs indications d'évaluation de danger, ou comprenant en outre, par le un ou les plusieurs processeurs, inclure dans l'indication de danger une référence à des images numériques d'exclusion.

5. Le procédé de la revendication 1, dans lequel l'identification comprend au moins l'un de : analyser un script électronique ou balayer numériquement un ou plusieurs ensembles par le un ou les plusieurs processeurs et éventuellement, lorsque l'identification comprend balayer numériquement un ou plusieurs ensembles par le un ou les plusieurs processeurs, dans lequel le balayage, de manière numérique, comprend capter une image du un ou des plusieurs ensembles en utilisant un dispositif informatique mobile.

6. Le procédé de la revendication 2, dans lequel l'identification comprend en outre identifier les éléments potentiels de danger en utilisant le composant d'apprentissage par machine, entraîné à reconnaître une similarité entre des combinaisons de symboles, qui connotent les éléments définis de danger et les combinaisons de symboles.

7. Le procédé de la revendication 2, comprenant, en outre, entraîner, par le un ou les plusieurs processeurs, le composant d'apprentissage par machine en utilisant un algorithme d'entraînement itératif.

8. Le procédé de la revendication 1, comprenant, par le un ou les plusieurs processeurs, régler l'évaluation de danger sur la base de facteurs sensibles au contexte pour des référents de combinaisons de symboles apparaissant dans l'ensemble électronique de données.

9. Une installation d'évaluation automatique de dangers de suppression dans une production de contenus multimédias, l'installation comprenant au moins un processeur raccordé à une mémoire, la mémoire contenant des instructions de programme qui, lorsqu'elles sont exécutées par le au moins un processeur, font que l'installation permet de :
accéder à un ensemble électronique de données pour planifier une production de contenus multimédias, l'ensemble de données comprenant des éléments potentiels de danger ;
accéder à une base de données d'enregistrements électroniques, corrélés chacun à un ou à plusieurs éléments définis de danger à partir d'une ou de plusieurs productions antérieures de contenus multimédias ;
identifier des éléments de danger dans l'ensemble électronique de données, en comparant, au moins en partie, les éléments définis de danger à des éléments potentiels de danger, détectés dans l'ensemble électronique de données par le un ou les plusieurs processeurs ;
créer un ensemble de mesures d'évaluation de danger signifiant chacun un niveau de danger pour l'un correspondant des éléments de danger comprenant un niveau de danger ; et
sauvegarder l'ensemble dans une mémoire d'ordinateur

10. L'installation de la revendication 9, dans laquelle la mémoire contient d'autres instructions pour l'identification en prédisant, au moins en partie, le niveau de danger, en utilisant un composant d'apprentissage par machine entraîné pour reconnaître une similarité entre le un ou les plusieurs éléments définis de danger et un ou plusieurs référents d'une ou de plusieurs combinaisons de symboles apparaissant dans l'ensemble électronique de données et dans laquelle éventuellement la mémoire contient d'autres instructions d'entraînement pour entraîner, par un ou plusieurs processeurs, le composant d'apprentissage par machine en utilisant un algorithme itératif d'entraînement.

11. L'installation de la revendication 9, dans laquelle la mémoire contient d'autres instructions de corrélation de l'ensemble de mesures d'évaluation du danger à une ou plusieurs combinaisons de symboles apparaissant dans un script de l'ensemble électronique de données.

12. L'installation de la revendication 11, dans laquelle la mémoire contient d'autres instructions pour créer une version annotée du script, en ajoutant au moins en partie une ou plusieurs indications de l'évaluation de danger à chacune de la une ou des plusieurs combinaisons de symboles et dans laquelle, en outre, éventuellement, la mémoire contient d'autres instructions pour conditionner la version annotée du script dans un support déchiffrable par ordinateur avec du contenu supplémentaire coordonné avec la une ou les plusieurs indications d'évaluation de danger, ou dans laquelle, en outre, la mémoire contient d'autres instructions pour inclure dans l'indication de danger une référence à des images numériques d'exclusion.

13. L'installation de la revendication 9, dans laquelle la mémoire contient d'autres instructions pour l'identification pour au moins l'un de : analyser un script électronique ou balayer numériquement un ou plusieurs ensembles par le un ou les plusieurs processeurs et, éventuellement, lorsque l'identification comprend balayer numériquement un ou plusieurs ensembles par le un ou les plusieurs processeurs, dans laquelle la mémoire contient d'autres instructions pour le balayage, de manière numérique, en captant la réception d'une image du ou des plusieurs ensembles à partir d'un dispositif informatique mobile.

14. L'installation de la revendication 10, dans laquelle la mémoire contient d'autres instructions pour l'identification en identifiant, au moins en partie, les éléments potentiels de danger en utilisant le composant d'apprentissage par machine entraîné à reconnaître une similarité entre des combinaisons de symboles, qui connotent les éléments définis de danger et les combinaisons de symboles.

15. L'installation de la revendication 9, dans laquelle la mémoire contient d'autres instructions pour régler l'évaluation du danger sur la base de facteurs sensibles au contexte pour des référents de combinaisons de symboles apparaissant dans l'ensemble électronique de données.
